# EUROPÄISCHE PATENTANMELDUNG

(11) **EP 4 442 378 A1**
(43) Veröffentlichungstag der Anmeldung: **09.10.2024**
(21) Anmeldenummer: 24167448.0
(22) Anmeldetag: 28.03.2024
(51) Int. Cl.: B08B 9/20, G07F 7/06

(54) **SYSTEM FÜR ZIRKULATION VON MEHRWEGBEHÄLTNISSEN**

(30) Priorität: 31.03.2023 DE 102023108385; 12.05.2023 DE 102023112679; 06.12.2023 DE 102023134204
(71) Anmelder: Reusable To-Go GmbH, 53113 Bonn (DE)
(72) Erfinder: MAßEN, Frank Andreas, 56335 Neuhäusel (DE); BEHRENS, Friedrich Wilhelm Rudolf, 50827 Köln (DE); REICHE, Robert, 53229 Bonn (DE)
(74) Vertreter: Roche, von Westernhagen & Ehresmann

(57) **Zusammenfassung**

Die Erfindung betrifft u. a. ein System (10) zur Zirkulation spülfähiger und mehrwegfähiger Behältnisse (11, 12) zur Aufnahme von Speisen (62) oder Getränken, insbesondere für den Gastronomiebereich.

## Beschreibung

Die Erfindung betrifft zunächst ein System nach Anspruch 1.

Die Erfindung bezieht sich gemäß einem ersten Aspekt auf ein System, das eine Zirkulation, also eine Kreislaufwirtschaft, von spülfähigen, mehrwegfähigen Behältnissen zur Aufnahme von Speisen und Getränken bereitstellt.

Das System zirkuliert Behältnisse, die insbesondere in der Gastronomie verwendet werden, wie z.B. Kaffeebecher, Trinkgefäße, Essschalen, wie z.B. Pommes frites Schalen, Einkammerschalen zur Aufnahme von Speisen oder Lebensmitteln, Mehrkammerschalen, Pizzaverpackungen etc.

Bislang sind diese Behältnisse überwiegend als Einwegbehältnisse für eine einmalige Verwendung konzipiert, und aus Kunststoff, Karton oder Pappe, teilweise auch aus Materialien wie Holz, z.B. Bambus, hergestellt und werden nach einmaligem Gebrauch entsorgt.

Wenn beispielsweise in einem Imbiss warme Speisen zubereitet werden und die Gäste die Speisen abgefüllt in Behältnissen an einem anderen Ort verzehren als dem Ausgabeort, werden diese in der Regel nach Gebrauch weggeworfen.

Die Erfindung setzt sich zur Aufgabe, ein System bereitzustellen, mit dem mehrwegfähige, spülfähige Behältnisse in einem Kreislauf verwendet werden können.

Die Erfindung löst diese Aufgabe mit den Merkmalen des Anspruches 1.

Das Prinzip der Erfindung besteht im Wesentlichen darin, ein System bereitzustellen, das zahlreiche unterschiedliche Stationen aufweist. Darin enthalten sind Übergabestationen, an denen Übergaben der spülfähigen Behältnisse an eine Transportvorrichtung sowie Übergaben von mit Behältnissen befüllten Transportvorrichtung protokolliert werden. Auch werden mittels Erfassungseinrichtungen Übergaben von Transportvorrichtungen, befüllt mit gespülten Behältnissen oder ungespülten Behältnissen, an Ausgabestationen, z.B. in dem Gastronomiebereich, oder Rückgaben an Pfandautomaten, oder Rückgaben an eine Spülstation protokolliert.

In Folge der zahlreichen vorzunehmenden Protokollierungen und infolge der Bereitstellung von Datensätzen, die Informationen über die Behältnisse, wie z.B. Pfandwerte und Informationen über Spülprozesse, protokollieren, und den Behältnissen und/ oder den Transportvorrichtungen Informationen über Pfandwerte zuzuordnen, können die Behältnisse im Kreislauf betrieben werden.

Das erfindungsgemäße System ermöglicht, dass auf jedes Behältnis ein Spül-Pfand erhoben wird. Dieses wird bei einem Inverkehrbringen eines gespülten Behältnisses gegenüber dem Gastronom erhoben, der dieses Behältnis nutzt oder zur Nutzung überlassen bekommt. Das Spül-Pfand haftet dem Behältnis an, bis es gespült ist. Auch weist jedes Behältnis ein Rückgabe-Pfand auf.

Das Spülpfand kann nur von autorisierten Spülstationen, die z.B. von Spülunternehmen betrieben werden, eingelöst werden. Das Spülpfand kann auch als Kreislaufbeitrag bezeichnet werden. Dieses Spülpfand oder dieser Kreislaufbeitrag deckt die Kosten für die Durchführung des Spülens und der Transportkosten. Er kann auch, für den Fall, dass das Behältnis nicht mehr gespült oder wieder verwendet werden kann, die Kosten für ein Recycling oder für eine Entsorgung umfassen.

Die Erfindung richtet sich insbesondere an Betriebe in der Gastronomie. Hierunter werden jegliche Arten von Betrieben verstanden, kommerzieller oder nicht kommerzieller Art, in denen Speisen oder Getränke ausgegeben werden können, wie beispielsweise Cafés, Restaurants, aber auch Bäckereibetriebe, Tankstellen, Kioske, Lieferdienste, in denen warme oder kalte Getränke sowie warme oder kalte Speisen zur Ausgabe und Mitnahme oder zum Verzehr vor Ort erhältlich sind.

Das erfindungsgemäße System umfasst wenigstens eine Ausgabestation. An dieser Ausgabestation sind Behältnisse, die mit Speisen oder Getränken befüllt sind, ausgebbar. Unter einer Ausgabestation im Sinne der Erfindung wird jeder Letztvertreiber gemäß §33 VerpackG verstanden. Es handelt sich also um alle Betriebe und Einrichtungen, die als Letztvertreiber zum Angebot von Mehrwegbehältnissen verpflichtet sind.

Als Ausgabestation wird gemäß der Erfindung beispielsweise auch ein Einzelhändler, ein Supermarkt, ein Bäckereigeschäft, ein Kiosk, eine Tankstelle, ein Drogeriemarkt, eine Küche, eine Kantine, ein Gemeinschaftsverpflegungsanbieter oder ein Lebensmittelgeschäft angesehen. Hier können Behältnisse, z.B. Salatschalen oder Obstschalen, mit Speisen befüllt und ausgegeben werden oder bereits befüllte Behältnisse ausgegeben werden.

Von der Erfindung sind auch Ausgabestationen umfasst, die von sog. Unverpacktläden bereitgestellt sind.

Soweit die vorliegende Patentanmeldung von Speisen, Getränken oder Lebensmitteln spricht, sind grundsätzlich alle Arten von Nahrungsmitteln umfasst und gemeint.

Mit dieser Patentanmeldung werden ein System, ein einzelnes Transportbehältnis, ein einzelnes Mehrwegbehältnis, und ein Verfahren zum Betrieb eines Systems beansprucht und beschrieben, bei denen unterschiedliche Mehrwegbehältnisse in einem Kreislaufsystem betrieben werden können.

Bei einer ersten Variante sind einzelne Mehrwegbehältnisse nicht voneinander unterscheidbar. Hier ist vorgesehen, dass sich Behältnisse erster Art bezüglich Form, Gewicht, Rückgabe-Pfand-Wert und Spül-Pfand-Wert nicht voneinander unterscheiden.

Hier kann die Transportvorrichtung eine eindeutige Kennung aufweisen, so dass Behältnisse einer ersten Art sowie Behältnisse weiterer Arten, sofern sie in der Transportvorrichtung angeordnet sind, dieser bestimmten Transportvorrichtung zugeordnet werden können.

Von der Erfindung sind aber auch Systeme, Mehrwegbehältnisse und Verfahren zum Betreiben eines Systems umfasst und beansprucht, bei denen einzelne Mehrwegbehältnisse voneinander eindeutig unterscheidbar sind, da jedem einzelnen Behältnis eine eindeutige Kennung zugeordnet ist.

Soweit in der vorliegenden Patentanmeldung von Codes, Kennungen oder Identifikationsnummern die Rede ist, können diese als eine Art Seriennummer, von einem Rechner des Systems verwaltet werden und einzelne Transportvorrichtungen oder einzelne Mehrwegbehältnisse oder einzelne Plomben voneinander unterscheiden.

Es besteht auch die Möglichkeit, einem einzelnen bestimmten Behältnis eine bestimmte Spüleigenschaft zuzuordnen. Beispielsweise kann eine Spüleigenschaft Informationen umfassen, dass ein bestimmtes Behältnis auf eine bestimmte Art und Weise gespült worden ist, beispielsweise unter Beachtung gesetzlicher oder religiöser Vorschriften. So können beispielsweise einem bestimmten Behältnis oder einer Transportvorrichtung Informationen zugeordnet werden, dass dieses Behältnis oder dass die Transportvorrichtung gemäß den Anforderungen "halal" gespült wurde, oder "koscher" gespült wurde oder mit bestimmten Arten von Reinigungsmitteln, Desinfektionsmitteln gespült oder behandelt wurde.

Von der Erfindung ist auch umfasst, wenn Spülinformationen einem einzelnen identifizierbaren Behältnis, oder einem nur bezüglich seiner Art her identifizierbaren Behältnis als Informationsdatensatz einer bestimmten, eindeutig identifizierbaren Kiste, also einer Transportvorrichtung, zugeordnet werden. So kann ein Gastronom, der seinem Kunden beispielsweise koscher gespülte oder "halal" gespülte Mehrwegbehältnisse anbieten möchte, Transportbehältnisse im System ordern, die ausschließlich koscher gespült oder "halal" gespült sind.

Für den Fall, dass große Mengen an Behältnissen transportiert werden müssen, kann die Kiste z. B. auch rollbar, als Rollkiste oder Rollcontainer, ausgebildet sein.

Zunächst soll die Erfindung im Rahmen eines erfindungsgemäßen Systems nach Anspruch 1 mit den einzelnen Stationen erläutert werden.

Nachfolgend soll das erfindungsgemäße System wie folgt erläutert werden:
Das System dient der Bereitstellung einer Zirkulation, also einer Kreislaufwirtschaft, von Behältnissen. Die Behältnisse sind mehrwegfähig, das heißt sie können beliebig oft - bis sie beispielsweise eine Beschädigung erleiden - verwendet werden. Sie sind spülfähig, das heißt sie bestehen aus einem Material, das eine Spülung, insbesondere eine mehrfache Spülung, erlaubt. Insbesondere bestehen die Behältnisse aus Kunststoff. Sie sind dabei so konstruiert, dass sie auch auf besonders einfache Weise spülfähig sind. Es kann vorgesehen sein, dass das Behältnis einen lösbaren Deckel aufweist, um die Spülung zu vereinfachen. Weiter kann vorgesehen sein, dass das Behältnis ohne Hinterschneidungsbereiche auskommt, um ein einfaches Spülen oder ein einfaches Trocknen zu erlauben.

Das Behältnis dient der Aufnahme von Speisen und Getränken. Es kann überall dort eingesetzt werden, wo Speisen oder Getränke zur Mitnahme - aber gleichermaßen auch für einen Verzehr vor Ort, also eine Ausgabestelle, vorgesehen sind.

Von der Erfindung ist auch umfasst, wenn z.B. Lebensmittelausgabestellen in Supermärkten entsprechende Ausgabestationen im Sinne des Anspruches 1 bereitstellen.

Das erfindungsgemäße System richtet sich beispielsweise auch an Lieferdienste.

Das erfindungsgemäße System umfasst eine Mehrzahl von Behältnissen erster Art und eine Mehrzahl von Behältnissen zweiter Art. Tatsächlich ist das System so konzipiert, dass es eine unbeschränkte Zahl von Arten von Behältnissen handhaben kann. Es ist beabsichtigt, das System zunächst mit Behältnissen weniger Arten zu etablieren, z.B. mit Pommes frites Schalen aus Kunststoff und Pizzaverpackungen aus Kunststoff, sowie Trinkbechern, und dieses nachfolgend mit weiteren Behältnissen unterschiedlicher Art zu ergänzen. Das System ist als offenes System ausgebildet, d.h. eine Zertifizierung weiterer Arten von Behältnissen vorausgesetzt, kann das System kann mit Behältnissen unterschiedlicher Art betrieben werden.

Die Behältnisse unterschiedlicher Arten können sich, z.B. bezüglich ihrer Form, ihrer Größe, ihres Gewichtes, ihrer Materialien, ihrer Wandstärken, ihrer Farben, ihrer Beschriftung, ihrer Kennzeichnung etc. unterscheiden.

Zunächst ist für das erfindungsgemäße System von Wichtigkeit, dass Behältnisse einer ersten Art von Behältnissen von einer zweiten Art von Behältnissen unterscheidbar sind. Eine solche Unterscheidbarkeit kann von Erfassungseinrichtungen bereitgestellt werden, die automatisch erkennen können, welcher Art die erfassten Behältnisse zugehörig sind. Von der Erfindung ist auch umfasst, wenn eine Erfassung der Art eines Behältnisses manuell erfolgt.

Das System ist derartig konzipiert, dass unterschiedliche Behältnisse einer Art voneinander nicht unterscheidbar sind. Von dem erfindungsgemäßen System ist aber auch zugelassen, und gemäß einer Ausbaustufe explizit auch beabsichtigt, dass die Behältnisse einer Art voneinander unterscheidbar sind, beispielsweise in dem sie eine eindeutige Kennung aufweisen, z.B. nach Art einer Seriennummer.

Das System nach Anspruch 1 erfordert eine solche Unterscheidbarkeit von Behältnissen einer Art allerdings nicht.

Das erfindungsgemäße System erfasst eine Mehrzahl von Transportvorrichtungen. Eine Transportvorrichtung ist zur Aufnahme und für den Transport einer Vielzahl von Behältnissen ausgebildet. Insbesondere können in einer Transportvorrichtung viele Behältnisse unterschiedlicher Art untergebracht werden. Die Transportvorrichtung kann z.B. von einer Kiste breitgestellt sein, die eine Bodenwand, vier Seitenwände und einen insbesondere vollständig lösbaren, aber an der Kiste befestigbaren Deckel aufweist. Der Deckel kann insbesondere unter Zuhilfenahme einer Sicherung an der Kiste, z.B. an einem Wandbereich der Kiste, befestigt werden. Die Sicherung kann z.B. eine Plombe umfassen.

Wesentlich ist für die Transportvorrichtung, dass diese in einen gesichert geschlossenen Zustand überführbar ist. In einem solchen Zustand können die Behältnisse nicht unbefugt aus der Transportvorrichtung entnommen werden. Damit wird ein Diebstahlschutz gewährleistet.

Die Transportvorrichtung kann nach Art einer großen Kiste, z.B. nach Art eines Containers ausgebildet sein und z.B. ein Volumen zwischen etwa 20 und etwa 2.000 Litern aufweisen. Statt eines Deckels kann die Kiste auch eine Tür, oder mehrere Türen oder ein Fenster umfassen.

Wesentlicher Bestandteil des erfindungsgemäßen Systems ist, dass die Transportvorrichtung eine eindeutige Kennung aufweist. Unterschiedliche Transportvorrichtungen sind mithilfe der Kennung voneinander unterscheidbar. Die Kennung ist von der Erfassungseinrichtung erfassbar und kann an einen Rechner, z.B. einem zentralen Rechner, der alle Informationen über das System verwaltet, übermittelt werden.

Der Rechner gemäß der vorliegenden Patentanmeldung kann insbesondere Bestandteil eines Netzwerkes sein. Das Netzwerk kann zentral oder dezentral organisiert sein. Das System kann auch mehrere, insbesondere miteinander vernetzte Rechner umfassen, die die Informationen verwalten.

Das erfindungsgemäße System umfasst mehrere Erfassungseinrichtungen. Mit den Erfassungseinrichtungen sind Informationen über die Behältnisse und Informationen über die Transportvorrichtungen erfassbar. Informationen über die Behältnisse können beispielsweise mittelbar oder unmittelbar Informationen über die Zahl von Behältnissen oder die Art der Behältnisse und über die Zuordnung von Behältnissen zu einzelnen Transportvorrichtungen umfassen.

Die Erfassungseinrichtungen sind mit dem Rechner verbindbar. Sie können dauerhaft mit dem Rechner verbindbar sein oder nur temporär. Die Erfassungseinrichtungen können stationär und fest angeordnet sein, z.B. an Stationen, wie z.B. an einer Spülstation, an einer Übergabestation oder an einer Rückgabestation. Die Erfassungseinrichtungen können aber auch mobil ausgebildet sein und z.B. von Personen, die mit dem Transport der Transportvorrichtung befasst sind, mitgeführt werden. So kann beispielsweise an einer Ausgabestation, also z.B. im Gastronomiebereich, bei der Übergabe einer Kiste mit gespülten Behältnissen, unter Zuhilfenahme einer solchen mobilen Erfassungseinrichtung die Übergabe der Transportvorrichtung mit gespülten Behältnissen protokolliert werden.

Insgesamt ist das erfindungsgemäße System mit einer Vielzahl von Übergabestationen ausgestattet und bietet die Möglichkeit, Übergaben von Mehrwegbehältnissen im gespülten Zustand und im ungespülten Zustand zu protokollieren. Dabei ist es wichtig, dass die Zahl und die Art der Behältnisse bei der Übergabe oder in Bezug zu einer Übergabe protokolliert werden. Diese Protokolle werden von einem Rechner verwaltet. Die Behältnisse sind pfandbehaftet und können ein Spülpfand und ein Rückgabepfand aufweisen. Für den Betrieb des Systems kommt es darauf an, von wem und an wen eine Übergabe von Mehrwegbehältnissen stattgefunden hat, um Pfandbeträge unter den Beteiligten des Systems ordnungsgemäß abrechnen zu können.

Das erfindungsgemäße System umfasst eine Spülstation. Tatsächlich kann das System mehrere Spülstationen umfassen. Hochrechnungen der Anmelderin haben ergeben, dass ein Betrieb von Millionen von Mehrwegbehältnissen mit nur wenigen zehn Spülstationen bundesweit in Deutschland realisierbar wäre.

Die Spülstationen sind innerhalb des Systems zertifiziert, d.h. es dürfen nur zugelassene Spülstationen an dem System teilnehmen. In der Spülstation sind Behältnisse unterschiedlicher Art spülbar. Vorteilhafterweise sind in diesen Spülstationen auch Transportvorrichtungen spülbar.

Zu dem erfindungsgemäßen System gehört eine Übergabestation. Diese kann vorteilhaft an der, oder nahe der Spülstation angeordnet sein.

Der Übergabestation kann auch eine Sortierstation zugeordnet sein, die die gespülten Behältnisse sortieren kann.

Bei einer Ausführungsform der Erfindung werden die gespülten Behältnisse sortiert in die Transportvorrichtung eingebracht.

An der Übergabestation können gespülte Behältnisse in eine gespülte Transportvorrichtung verbracht oder eingebracht werden. Insbesondere sind die gespülten Behältnisse vollständig getrocknet. Nach dem Einbringen der gespülten Behältnisse in die Transportvorrichtung, ist diese in einen gesichert geschlossenen Zustand überführbar.

Das Einbringen der Behältnisse in die Transportvorrichtung kann protokolliert und dokumentiert werden. Hierfür ist eine Erfassungsvorrichtung vorgesehen. Diese ist vorteilhafterweise an der oder nahe der Übergabestation angeordnet.

Vorteilhafterweise erfolgt eine Erfassung einer Information darüber, dass und welche Behältnisse in eine Transportvorrichtung eingebracht sind und eine Zuordnung dieser Informationen zu einer bestimmten Kennung der Transportvorrichtung zeitlich im Zusammenhang mit dem Einbringen der gespülten Behältnisse in die Transportvorrichtung.

Beispielsweise bei Anforderungen von einem Gastronom, nach einer bestimmten Art und nach einer bestimmten Zahl gespülter Behältnisse, kann bei einer Konfektionierung der Transportvorrichtung mit gespülten Behältnissen nahe der Spülstation eine solche Informationserfassung erfolgen.

Die erfasste Information kann von der Erfassungseinrichtung automatisch oder manuell dem Rechner zugeführt werden. Der Rechner kann diese Informationen sowie noch weitere, später zu beschreibende Informationen verwalten.

Die Information über die in die Transportvorrichtung eingebrachten, gespülten Behältnisse, kann eine Information über die Zahl und über die Art der Behältnisse umfassen. Dieser Information kann z.B. auch eine Information über einen aufsummierten Pfandwert der in die Transportvorrichtung eingebrachten Behältnisse zugeordnet sein oder zugeordnet werden.

Die mit gespülten Behältnissen gefüllte Transportvorrichtung kann zu einer Ausgabestation transportiert werden. Eine Ausgabestation im Sinne des Systems ist beispielsweise ein Gastronomiebetrieb, an dem Speisen oder Getränke zur Mitnahme, oder an der mit Speisen oder Getränken befüllte Behältnisse ausgegeben werden. Dort kann die Transportvorrichtung zur Entnahme der gespülten Behältnisse -autorisiert - geöffnet werden. Die gespülten Behältnisse können dort mit Speisen oder Getränken gefüllt werden.

Gäste des Gastronomiebetriebes können nach dem Verzehr von Speisen die ungespülten, gegebenenfalls mit Speiseresten behafteten Behältnisse entweder an der Ausgabestation zurückgeben oder an einer Rücknahmestation zurückgeben.

Wenn eine Rückgabe an der Ausgabestation - oder an einer anderen Ausgabestation - erfolgt, kann der Gastronom - oder ein anderer Gastronom - die ungespülten Behältnisse wiederum in eine Transportvorrichtung einbringen. Bei der Ausgabestation wird dann die Transportvorrichtung mit ungespültem Behältnis abgeholt.

Der Gastronom oder der Transporteur kann die Transportvorrichtung mit darin enthaltenen ungespülten Behältnissen in einen gesicherten, geschlossenen Zustand überführen, z.B. unter Zuhilfenahme einer Plombe. Eine solche Plombe kann beispielsweise eine unmittelbare oder mittelbare Kennung der Ausgabestation umfassen.

Der Transporteur kann die Transportvorrichtung mit ungespülten Behältnissen zu einer Rück-Übergabestation transportieren. Dort kann die Transportvorrichtung zur Entnahme der ungespülten Behältnisse geöffnet werden.

Wiederum ist eine Erfassungsvorrichtung vorgesehen, mit der eine Information über die zu entnehmenden Behältnisse aufgenommen werden kann, und einer Kennung dieser Transportvorrichtung und/ oder einer Identifikationsnummer oder einer Kennung der Ausgabestation zugeordnet werden kann. Eine Information über die zu entnehmenden Behältnisse kann wiederum eine Information über die Zahl und die Art der Behältnisse umfassen. Dies dient insbesondere dazu, einen aufsummierten Pfandwert der zu entnehmenden Behältnisse zu erhalten und diesen Pfandwert der Kennung der Transportvorrichtung oder unmittelbar der Kennung der Ausgabestation zuzuordnen. Über das Erfassen dieser Informationen kann eine Auszahlung des Rückgabe-Pfandbetrages oder dessen Gutschrift an die Ausgabestation bzw. an den entsprechenden Gastronomiebetrieb erfolgen.

Die ungespülten Behältnisse können von den Kunden der Ausgabestation aber auch an Rücknahmestationen, z.B. an Pfandautomaten zurückgegeben werden. Dort können die Behältnisse bezüglich ihrer Art erkannt werden und es kann ein Rückgabepfandwert ermittelt werden. Der Rückgabepfandwert wird, im Zuge des Einbringens der ungespülten Behältnisse in den Pfandautomaten, ausgezahlt. Die Auszahlung kann z.B. in Bar oder elektronisch oder als Gutschrift erfolgen.

An der Rücknahmestation werden die ungespülten Behältnisse in eine Transportvorrichtung eingebracht. Zum Zwecke eines Transportes wird die Transportvorrichtung in den gesichert verschlossenen Zustand überführt. Mittels einer Erfassungseinrichtung kann von dem Transporteur bei Abholung der Transportvorrichtung an der Rücknahmestation eine Kennung des Transportbehältnisses zu einem Code der Rücknahmestation in Bezug gesetzt werden. Der Transporteur kann also beispielsweise dann, wenn er eine Transportvorrichtung aus einer Rücknahmestation entnimmt, dieser speziellen Transportvorrichtung den Code dieser Rücknahmestation zuordnen. Auf diese Weise kann der Rechner Informationen verwalten, welcher Pfandbetrag an der Rücknahmestation ausgezahlt worden ist und bei Eingang der Transportvorrichtung an der Rückübergabestation überprüfen, dass die dort zu entnehmenden Behältnisse exakt den ausbezahlten Pfandbetrag aufweisen.

Von der Rücknahmestation erfolgt sodann ein Transport der Transportvorrichtung mit ungespülten Behältnissen zur Rück-Übergabestation. Dort wird das Transportbehältnis geöffnet, die ungespülten Behältnisse werden entnommen und wiederum sorgt eine Erfassungseinrichtung dafür, eine Information über die ungespülten Behältnisse zu erfassen. Diese Information kann insbesondere eine Information über Zahl und Art der ungespülten Behältnisse umfassen. Diese Information kann insbesondere eine Information über den summierten Pfandwert dieser Behältnisse umfassen. Diese Information kann wiederum der Kennung der Transportvorrichtung oder mittelbar oder unmittelbar der Identifikationsnummer der Rücknahmestation zugeordnet werden.

Die an der ersten Rück-Übergabestation und an der zweiten Rück-Übergabestation ankommenden ungespülten Behältnisse werden sodann der Spülstation, zugeführt, dort gespült und dem Kreislauf wiederum zugeführt.

Um das Spülen der Behältnisse und der Transportkiste zu finanzieren, wird bei Inverkehrbringen gespülter Behältnisse und erneutem Inverkehrbringen gespülter Behältnisse ein Spülpfandbetrag, der zuvor bereits erwähnte Kreislaufbetrag, erhoben. Dieser Spülpfandbetrag wird - zusammen mit dem Rückgabe-Pfandbetrag - nur gegenüber dem Gastronom erhoben. Wenn der Gastronom Mehrwegbehältnisse mit Speisen befüllt und ausgibt, erhebt der Gastronom gegenüber seinen Kunden nur den Rückgabepfandbetrag. Am Pfandautomaten wird auch nur der Rückgabepfandbetrag ausgezahlt.

Auch wenn der Gastronom ungespülte Behältnisse zu der ersten Rück-Übergabestation überführen lässt, erhält dieser nur den Rückgabepfandbetrag zurück.

Das erfindungsgemäße System ordnet einem Behältnis einen Spülpfandbetrag und einen Rückgabe-Pfandbetrag zu. Der Rückgabe-Pfandbetrag kann z. B. 50 Cent für ein Behältnis und der Spülpfandbetrag kann beispielsweise 20 Cent für ein Behältnis betragen, um die Spül- und Transportkosten zu decken.

Von der Erfindung ist auch umfasst, wenn eine Eigentumsabsicherung an den Behältnissen auf andere Weise erfolgt. Beispielsweise kann vorgesehen sein, dass ein Nutzer eines Behältnisses über gesonderte Vereinbarungen mit einem Teilnehmer des Systems oder mit dessen Betreiber, z. B. über eine Mitgliedschaft, besonderen Regelungen beim Besitzübergang der Behältnisse unterliegt. Zum Beispiel können Vereinbarungen getroffen werden, dass an einen Endkunden übergebene Mehrwegbehältnisse innerhalb einer vorgeschriebenen Zeitdauer zurückgegeben werden müssen, und ansonsten Sanktionen eintreten. Zum Beispiel können zu unterschiedlichen Rückgabezeitpunkten unterschiedliche Rückgabe-Pfandwerte erstattet werden.

Dabei kann auch vorgesehen sein, dass ein Spülpfandbetrag sehr gering angesetzt wird, gegebenenfalls sogar auf "Null" gesetzt wird.

Der Begriff "Pfandwert", "Rückgabe-Pfandwert" oder "Spülpfandwert" umfasst neben dem eigentlichen Verständnis dieses Begriffes im weitesten Sinne eine Zuordnung eines Geldbetrages zu dem Behältnis bei Inverkehrbringen des Behältnisses und eine Zuordnung eines Geldbetrages zu dem Behältnis bei Rückgabe des Behältnisses.

Ein Rückgabe-Pfandwert kann auch ein Rückkauf-Preis oder ein Restwert des Behältnisses sein.

Ein Rückgabe-Pfandwert kann auch darauf beruhen, dass eine bei der Nicht-Rückgabe angedrohte oder vereinbarte Sanktion nicht eintritt.

Das erfindungsgemäße System führt zahlreiche Protokollierungen durch und ermöglicht damit einen geregelten, protokollierten und zu automatisiert zu überwachenden Kreislauf. Außerdem schützt das System mit den zahlreichen Erfassungseinrichtungen vor Missbrauch.

Gemäß einer vorteilhaften Ausgestaltung der Erfindung ist Behältnissen einer Art ein gleicher Pfandbetrag, insbesondere ein gleicher Spül-Pfandbetrag und/ oder ein gleicher Rückgabe-Pfandbetrag, zugeordnet. Diese Ausgestaltung der Erfindung ermöglicht eine besonders einfache Handhabung.

Gemäß einer vorteilhaften Ausgestaltung der Erfindung sind Behältnissen unterschiedlicher Art unterschiedliche Pfandbeträge, insbesondere unterschiedliche Spül-Pfandbeträge und/ oder unterschiedliche Rückgabe-Pfandbeträge, zugeordnet. Diese Ausgestaltung der Erfindung ermöglicht eine exakte Zuordnung eines bestimmten Spülaufwandes zu einem Behältnis einer bestimmten Art.

Gemäß einer vorteilhaften Ausgestaltung der Erfindung unterscheiden sich Behältnisse erster Art und die Behältnisse zweiter Art durch Form und/oder Gewicht und/oder Größe und/oder Farbe und/oder durch eine Kennzeichnung. Diese Ausgestaltung der Erfindung ermöglicht die Bereitstellung eines nahezu offenen Systems mit einer Vielzahl unterschiedlicher Behältnisse unterschiedlicher Arten.

Gemäß einer vorteilhaften Ausgestaltung der Erfindung umfassen Behältnisse erster Art und die Behältnisse zweiter Art Behältnisse aus der nachfolgenden Gruppe: Trinkbecher, Pizzaverpackung, Hamburgerverpackung, Ess-Schale, insbesondere Ein-Kammer-Schale, Mehr-Kammer-Schale, Deckel für einen Becher. Diese Ausgestaltung der Erfindung ermöglicht einen Ersatz heute üblicher Einweg-Behältnissen oder Verpackungen für Lebensmittel durch Mehrwegbehältnisse.

Gemäß einer vorteilhaften Ausgestaltung der Erfindung bestehen die Behältnisse erster Art und die Behältnisse zweiter Art aus Kunststoff, Glas, Metall oder Keramik. Diese Ausgestaltung der Erfindung ermöglicht einen dauerhaften Umlauf von Behältnissen.

Gemäß einer vorteilhaften Ausgestaltung der Erfindung ist das Behältnis trackbar ausgebildet. Es weist hierzu eine elektronische Einrichtung, z. B. einen trackbaren Tag, beispielsweise einen Air-Tag auf, der insbesondere unter Zuhilfenahme von WLAN-Netzen und/oder Mobilfunknetzen Positionsdaten dieses Behältnisses leicht verfügbar macht. Beispielsweise kann zurückgegriffen werden auf Tracking-Tags, die von der Firma Kizy Tracking unter www.kizytracking.com oder von der Firma Sensize unter www.sensize.net in Verkehr gebracht werden.

Die Erfindung betrifft des Weiteren eine Transportvorrichtung nach Anspruch 7.

Die Aufgabe der Erfindung besteht darin, eine Transportvorrichtung anzugeben, mit der spülfähige und mehrwegfähige Behältnisse auf besonders einfache Weise zirkulierbar sind.

Die Erfindung löst diese Aufgabe mit den Merkmalen des Anspruches 7.

Zur Vermeidung von Wiederholungen wird auf die obigen Ausführungen verwiesen.

Die Transportvorrichtung der beanspruchten Art kann in dem zuvor beschriebenen System und auch in dem nachstehend noch zu beschreibenden Verfahren erfindungsgemäß vorteilhaft eingesetzt werden.

Gemäß einer vorteilhaften Ausgestaltung der Erfindung ist die Transportvorrichtung diebstahlsicher und/ oder Ungeziefer sicher ausgebildet. Dies ermöglicht einen besonders sicheren Transport der ungespülten Behältnisse, aber auch der gespülten Behältnisse.

Gemäß einer vorteilhaften Ausgestaltung der Erfindung ist die Transportvorrichtung luftdicht und/oder flüssigkeitsauslaufsicher und/oder wassereintrittssicher und/ oder geruchsdicht ausgebildet. Dies ermöglicht einen besonders sicheren Transport der ungespülten Behältnisse, aber auch der gespülten Behältnisse.

Gemäß einer vorteilhaften Ausgestaltung der Erfindung ist der Kennung der Transportvorrichtung eine Spülinformation zugeordnet, z.B. nach Art eines Spülzertifikates. Dies ermöglicht eine Verwaltung von Spülinformationen. Spülinformationen können insbesondere eine Information umfassen, dass bestimmte Behältnisse gespült worden sind, wie oder wann bestimmte Behältnisse gespült worden sind, dass eine Trocknung zusammen mit einem Spülvorgang durchgeführt worden ist und/ oder dass eine Desinfektion vorgenommen worden ist. Dies ermöglicht eine besonders sichere Betriebsweise.

Gemäß einer vorteilhaften Ausgestaltung der Erfindung umfasst die Spülinformation eine Information über eine durchgeführte Spülung der Transportvorrichtung und/oder eine Information über eine durchgeführte Spülung eines in der Transportvorrichtung aufgenommen Behältnisses. Diese Ausgestaltung der Erfindung ermöglicht eine besonders breite Anwendungsweise des erfindungsgemäßen Systems.

Gemäß einer vorteilhaften Ausgestaltung der Erfindung ist die Transportvorrichtung als Kiste ausgebildet und umfasst einen lösbar an der Kiste befestigbares Deckelelement. Am oberen Rand der Kiste kann ein nach außen vorragender, insbesondere umlaufend ausgebildeter Kragen angeordnet sein. In dem Kragen können Öffnungen für eine Sicherung der Plombe angebracht sein. Auch an dem Deckel kann ein nach außen vorspringender, insbesondere umlaufend ausgebildeter Kragen angebracht sein, in dem ebenfalls Öffnungen oder Durchbrüche für einen Durchtritt einer Sicherung der Plombe angebracht werden.

Für den Fall, dass der Deckel im montierten Zustand auf der Kiste aufliegt, sind die Öffnungen im Kragen des Deckels und die Öffnungen im Kragen der Kiste vorteilhaft in Flucht zueinander angeordnet und können von der Sicherung der Plombe durchsetzt werden.

Gemäß einer weiteren vorteilhaften Ausgestaltung der Erfindung sind in dem umlaufenden Kragen an der Kiste Ausnehmungen angeordnet, in die Vorsprünge eintreten können, die an dem umlaufenden Kragen des Deckels angeordnet sind. Diese Vorsprünge können insbesondere Verriegelungselemente umfassen. Dabei kann es sich z.B. um federvorbelastete, bewegbare Elemente handeln, die eine Verriegelung des Deckels an der Kiste ermöglichen. Die Vorsprünge können aber alternativ als ein Scharnier ausgebildet sein, und beispielsweise ein Drehlager bereitstellen, um eine Schwenkbarkeit des Deckels relativ zu der Kiste zu ermöglichen.

Gemäß einer weiteren vorteilhaften Ausgestaltung der Erfindung ist auf der Oberseite des Deckels ein nach oben vorspringender Rahmen angeordnet. Dieser sorgt dafür, dass im gestapelten Zustand mehrerer Kiste übereinander, wobei jede Kiste jeweils einen Deckel aufweist, eine Beabstandung der Oberseite des Deckels von der Unterseite der darauf angeordneten Kiste erreicht wird.

Dieser Rahmen kann Rücksprünge, insbesondere Einbuchtungen, aufweisen, die einen Zugang zu einem Zwischenraum zwischen der Oberseite des Deckels und der Unterseite der darauf angeordneten Kiste bereitstellen. In diesen Zwischenraum hinein kann die eigentliche Plombe gelegt und darin untergebracht werden. Diese Unterbringung der Plombe ermöglicht eine Stapelung mehrerer Kisten mit Deckeln übereinander, ohne dass die Plombe die Stapelung beeinträchtigt, und ohne dass die Plombe über die Abmessungen der Kiste nach außen vorragt.

Gemäß einer weiteren vorteilhaften Ausgestaltung weist die Kiste im Wesentlichen geschlossene ausgebildete Wände auf. Hierdurch wird eine Auslaufsicherheit bereitgestellt.

Gemäß einer weiteren vorteilhaften Ausgestaltung der Erfindung weist die Kiste an ihren beiden Schmalseitenwänden außen angeordnete Wandungsbereiche auf, die eine Griffmulde bereitstellen. Dies ermöglicht die Bereitstellung einer geschlossenen Schmalseitenwand und eine einfache Handhabung der Kiste.

Gemäß einer weiteren vorteilhaften Ausgestaltung der Erfindung ist an der Unterseite des Deckels ein nach unten vorspringender, insbesondere umlaufender Kragen angeordnet. Dieser taucht im montierten Zustand des Deckels an der Kiste in den Innenraum der Kiste ein. Hierdurch wird eine besonders gute Dichtigkeit erreicht, insbesondere eine Fruchtfliegen-Dichtigkeit und/ oder eine Maden-Dichtigkeit. Die vorgeschlagene Geometrie und Konstruktion ermöglicht darüber hinaus einen Verzicht oder einen weitgehenden Verzicht auf gesonderte Dichtungselemente.

Die Erfindung bezieht sich des Weiteren auf ein Verfahren zum Betreiben eines Systems zur Zirkulation spülfähiger und mehrwegfähiger Behältnisse zur Aufnahme von Speisen oder Getränken.

Der Erfindung liegt die Aufgabe zu Grunde, ein Verfahren anzugeben, mit einem Zirkulationsbetrieb von Mehrwegbehältnissen durchführbar ist.

Die Erfindung löst diese Aufgabe mit den Merkmalen des Anspruches 9.

Zur Vermeidung von Wiederholungen wird auf die obigen Ausführungen verwiesen.

Die Erfindung bezieht sich gemäß einem weiteren Aspekt auf ein mehrwegfähiges und spülfähiges Behältnis aus Kunststoff nach Anspruch 10.

Die Aufgabe der Erfindung besteht darin, ein Behältnis anzugeben, mit dem dauerhaft und langlebig ein Kreislauf betrieben werden kann.

Die Erfindung löst diese Aufgabe mit den Merkmalen des Anspruches 10.

Zur Vermeidung von Wiederholungen wird auf die obigen Ausführungen verwiesen.

Eine Besonderheit besteht darin, dass dadurch, dass das Einzelne Behältnis identifizierbar ist, einer Kennung des Behältnisses eine Spülinformation zuordnenbar ist.

Damit kann exakt festgehalten werden und von einem Rechner des Systems auch jederzeit abgefragt werden, ob, wann, und womit das Behältnis gespült worden ist.

Gemäß einer vorteilhaften Ausgestaltung der Erfindung ist das Behältnis dadurch gekennzeichnet, dass die Kennung unmittelbar an dem Behältnis angeordnet ist.

Gemäß einer vorteilhaften Ausgestaltung der Erfindung ist das Behältnis dadurch gekennzeichnet, dass die Kennung automatisiert, maschinenlesbar erfassbar ist.

Gemäß einer vorteilhaften Ausgestaltung der Erfindung ist das Behältnis trackbar ausgebildet. Es weist hierzu eine elektronische Einrichtung, z. B. einen trackbaren Tag, beispielsweise einen Air-Tag auf, der insbesondere unter Zuhilfenahme von WLAN-Netzen und/oder Mobilfunknetzen Positionsdaten dieses Behältnisses leicht verfügbar macht. Beispielsweise kann zurückgegriffen werden auf Tracking-Tags, die von der Firma Kizy Tracking unter www.kizytracking.com oder von der Firma Sensize unter www.sensize.net in Verkehr gebracht werden.

Die Erfindung bezieht sich des Weiteren auf ein System nach Anspruch 11.

Die Aufgabe der Erfindung liegt darin, ein System anzugeben, mit dem Mehrwegbehältnisse zirkulierbar sind.

Die Erfindung löst diese Aufgabe mit den Merkmalen des Anspruches 11.

Das erfindungsgemäße System kann eine Zuordnung einer Kennung eines Behältnisses zu einer Information über eine durchgeführte Spülung vornehmen.

Zur Vermeidung von Wiederholungen wird auf die obigen Ausführungen verwiesen.

Gemäß einer vorteilhaften Ausführungsform der Erfindung umfasst das System eine Information über eine durchgeführte Spülung eines Behältnisses, die wenigstens eine Information aus der nachfolgenden Gruppe von Informationen umfasst:
a) dass eine Spülung durchgeführt worden ist,
b) wann eine Spülung durchgeführt worden ist,
c) mit welchen Reinigungsmitteln eine Spülung durchgeführt worden ist,
d) auf welche Art oder Weise eine Spülung durchgeführt worden ist.

Die Erfindung bezieht sich gemäß einem weiteren Aspekt auf einen Datensatz nach Anspruch 12.

Der Erfindung liegt die Aufgabe zugrunde, einen Datensatz anzugeben, mit dem ein Betrieb eines Systems mehrwegfähiger Behältnisse durchführbar ist.

Die Erfindung löst diese Aufgabe mit den Merkmalen des Anspruches 12.

Gemäß einer vorteilhaften Ausgestaltung der Erfindung ist der Datensatz dadurch gekennzeichnet, dass eine Information über eine durchgeführte Spülung eines Behältnisses wenigstens eine Information aus der nachfolgenden Gruppe von Informationen umfasst:
e) dass eine Spülung durchgeführt worden ist,
f) wann eine Spülung durchgeführt worden ist,
g) mit welchen Reinigungsmitteln eine Spülung durchgeführt worden ist,
h) auf welche Art oder Weise eine Spülung durchgeführt worden ist.

Die Erfindung bezieht sich gemäß einem weiteren Aspekt auf ein Zwischenlager für eine Mehrzahl von Transportvorrichtungen nach Anspruch 13.

Die Aufgabe der Erfindung besteht darin, für ein System der zuvor beschriebenen Art ein Zwischenlager bereitzustellen, in dem eine Mehrzahl von Transportvorrichtungen unterbringbar ist.

Die Erfindung löst diese Aufgabe mit den Merkmalen des Anspruches 13.

Das Prinzip der Erfindung besteht im Wesentlichen darin, ein Zwischenlager für eine Mehrzahl von Transportvorrichtungen vorzusehen, das eine Vielzahl von Stellplätzen bietet. Jedem Stellplatz kann eine Kennung einer bestimmten Transportvorrichtung, insbesondere mittels einer Steuerung des Zwischenlagers, zugeordnet werden. Der Stellplatz ist zugangsgesteuert öffenbar und schließbar. Dies ermöglicht einen gebündelten Transport von Transportvorrichtungen von der Spülstation zu dem Zwischenlager und deren Abholung von dem Zwischenlager zum Zweck eines Transportes zu der Spülstation und eine vereinfachte individualisierte Abholung von Transportvorrichtungen an dem Zwischenlager durch einen Abholer sowie auch eine erleichterte Abgabe von Transportvorrichtungen an dem Zwischenlager.

Von der Spülstation können mehrere Transportvorrichtungen mit gespülten Behältnissen zu dem Zwischenlager gemeinsam, also gebündelt, transportiert werden und dort von einzelnen Gastronomen oder anderen Verwendern individuell, Zugangscode gesteuert, abgeholt werden.

Andererseits kann ein Gastronom oder ein anderer Nutzer des Systems z.B. ein Transportbehältnis mit ungespülten Behältnissen zugangsgesteuert in einen Stellplatz des Zwischenlagers einbringen.

Gemäß einer vorteilhaften Ausgestaltung der Erfindung sind in dem Zwischenlager Transportvorrichtungen mit gespülten Behältnissen und Transportvorrichtungen mit ungespülten Behältnissen anordenbar. Dies bietet den Vorteil einer besonders einfachen Konstruktion und Handhabung des Zwischenlagers und einen einfachen Betrieb des Systems. Transporte von der Spülstation zu dem Zwischenlager und von dem Zwischenlager zu der Spülstation können auf diese Weise vereinfacht werden.

Gemäß einer vorteilhaften Ausgestaltung der Erfindung weist ein Stellplatz eine Grundfläche von wenigstens 400 mm x 300 mm, insbesondere von wenigstens 600 mm x 400 mm auf. Diese Ausführungsform bietet die Möglichkeit einer Unterbringung sehr groß dimensionierter Transportvorrichtungen. Damit wird darüber hinaus ein Standardmaß bereitgestellt, das eine Unterbringung großer Transportvorrichtungen zulässt.

Die Erfindung bezieht sich des Weiteren auf ein System nach Anspruch 14.

Die Aufgabe dieser Erfindung besteht darin, ein System bereitzustellen, mit dem mehrwegfähige spülfähige Behältnisse in einem Kreislauf verwendet werden können.

Die Erfindung löst diese Aufgabe mit den Merkmalen des Anspruches 14.

Die Erfindung versteht sich am besten in Bezug zu den Vorteilen und Merkmalen des oben beschriebenen Systems, die analog Anwendung finden können.

Das System nach Anspruch 14 entspricht dem zuvor beschriebenen System, wobei zusätzlich ein Zwischenlager vorgesehen ist.

Ein solches Zwischenlager kann die Transportwege reduzieren, und ermöglicht einen gebündelten Transport mehrerer Transportvorrichtungen gemeinsam und ermöglicht auch eine individualisierte, Zugangscode gesteuerte Abholung von Transportvorrichtungen mit Behältnissen aus dem Zwischenlager und eine Bestückung des Zwischenlagers mit Transportvorrichtungen. Hierdurch wird das Betreiben eines solchen Systems vereinfacht.

Gemäß einer vorteilhaften Ausgestaltung der Erfindung ist an dem Zwischenlager eine Erfassungseinrichtung angeordnet. Diese Ausgestaltung der Erfindung ermöglicht eine besonders einfache Protokollierung einer Beschickung des Zwischenlagers mit einer bestimmten, anhand ihrer Kennung identifizierbaren Transportvorrichtung, sowie gleichermaßen auch eine besonders einfache Protokollierung einer Entnahme einer bestimmten Transportvorrichtung aus dem Zwischenlager.

Gemäß einer vorteilhaften Ausgestaltung der Erfindung ist eine Übergabe der Transporteinrichtung mit gespülten Behältnissen an das Zwischenlager, insbesondere an einen bestimmten Stellplatz des Zwischenlagers, von der Erfassungseinrichtung erfassbar. Diese Ausgestaltung bietet die Möglichkeit einer einfachen Protokollierung, dass eine bestimmte Transporteinrichtung das Zwischenlager erreicht hat und dort in einen bestimmten Stellplatz positioniert worden ist.

Gemäß einer vorteilhaften Ausgestaltung der Erfindung ist eine Übergabe der Transporteinrichtung mit gespülten Behältnissen von einem Stellplatz des Zwischenlagers an einen Transporteur oder eine abholende Person von der Erfassungseinrichtung erfassbar ist. Diese Ausgestaltung der Erfindung bietet die Möglichkeit einer Protokollierung einer Übergabe einer bestimmten Transportvorrichtung von dem Zwischenlager z.B. an einen Gastronom, oder an einen Transporteur oder an eine abholende Person.

Gemäß einer vorteilhaften Ausgestaltung der Erfindung ist insbesondere eine Übergabe der Transporteinrichtung mit ungespülten Behältnissen an das Zwischenlager, insbesondere an einen bestimmten Stellplatz des Zwischenlagers, von der Erfassungseinrichtung erfassbar. Diese Ausgestaltung der Erfindung ermöglicht eine besonders einfache Protokollierung der Rückgabe von Transportvorrichtungen mit ungespülten Behältnissen an das Zwischenlager.

Gemäß einer vorteilhaften Ausgestaltung der Erfindung ist eine Übergabe der Transporteinrichtung mit ungespülten Behältnissen von einem Stellplatz des Zwischenlagers an einen Transporteur oder eine abholende Person von der Erfassungseinrichtung erfassbar. Diese Ausgestaltung der Erfindung ermöglicht eine besonders einfache Protokollierung der Abgabe einer Transportvorrichtung mit ungespülten Behältnissen von dem Zwischenlager an einen Transporteur.

Die Erfindung bezieht sich gemäß einem weiteren Aspekt auf ein Verfahren nach Anspruch 15.

Die Aufgabe der Erfindung besteht darin ein Verfahren anzugeben, mit dem ein Zirkulationsbetrieb von Mehrwegbehältnissen durchführbar ist.

Die Erfindung löst diese Aufgabe mit den Merkmalen des Anspruches 15.

Das Prinzip der Erfindung nach Anspruch 15 versteht sich am besten in Kenntnis und in Würdigung der obigen Ausführungen zu Anspruch 9.

Der Gegenstand des Anspruches 15 unterscheidet sich von dem Gegenstand des Anspruches 9 dadurch, dass ein Zwischenlager bereitgestellt wird. Das Zwischenlager weist eine Vielzahl von Stellplätzen für Transportvorrichtungen auf. In dem Zwischenlager können Transportvorrichtungen mit gespülten Behältnissen und mit ungespülten Behältnissen untergebracht werden.

Die Übergaben von Transportvorrichtungen mit ungespülten Behältnissen oder mit gespülten Behältnissen sind von wenigstens einer Erfassungseinrichtung protokollierbar.

Gemäß einer vorteilhaften Ausgestaltung der Erfindung wird ein Transport mehrerer Transportvorrichtungen mit gespülten Behältnissen zu dem Zwischenlager gebündelt durchgeführt. Diese Ausführungsform bietet den Vorteil einer Reduktion von Transporten, da z.B. mehrere Transportvorrichtungen z.B. gemeinsam mit einem Transportfahrzeug, gebündelt von der Spülstation oder von der Übergabestation zu dem Zwischenlager transportiert werden können.

Gemäß einer vorteilhaften Ausgestaltung der Erfindung wird ein Transport mehrerer Transportvorrichtungen mit ungespülten Behältnissen von dem Zwischenlager zu der Rückübergabestation gebündelt durchgeführt. Diese Ausführungsform bietet die Möglichkeit, Transportwege zu reduzieren, da mehrere Transportvorrichtungen gemeinsam von dem Zwischenlager zu der Rückgabestation transportiert werden können.

Weitere Vorteile ergeben sich aus den nicht zitierten Ansprüchen sowie der nachfolgenden Beschreibung der in den Zeichnungen dargestellten Ausführungsbeispiele.

In den Zeichnungen zeigen:
- Fig. 1a: in einer schematischen, perspektivischen Ansicht ein Behältnis erster Art in Form einer Essschale, insbesondere nach Art einer Pommes Frites-Schale,
- Fig. 1b: in schematischer perspektivischer Ansicht ein Ausführungsbeispiel eines Behältnisses zweiter Art, nach Art eines Trinkbechers, z. B. eines Kaffeebechers,
- Fig. 1c: in einer Darstellung vergleichbar mit der Darstellung der Fig. 1a ein Behältnis dritter Art in Form einer Zweikammer-Essschale,
- Fig. 1d: in einer schematischen perspektivischen Ansicht ein Behältnis einer vierten Art in Form eines geöffnet dargestellten Pizzakartons aus Kunststoff,
- Fig. 1e: in einer perspektivischen, schematischen Ansicht einen Deckel für ein Trinkgefäß gemäß Fig. 1b,
- Fig. 2a: in einer schematischen, teilgeschnittenen Prinzipdarstellung ein erstes Ausführungsbeispiel einer erfindungsgemäßen Transportvorrichtung mit einem beabstandet angeordneten dargestellten Deckel,
- Fig. 2b: die Transportvorrichtung der Fig. 2a in geschlossenem und gesicherten Zustand mit einer Sicherung mit einer Plombe,
- Fig. 2c: die Transportvorrichtung der Fig. 2b in einer teilgeschnittenen, vergrößerten Darstellung, etwa entlang Teilkreis IIc in Fig. 2b, unter Veranschaulichung des Verbindungsbereiches von Deckel und Wandung der Transportvorrichtung mit angebrachter Sicherung und Plombe,
- Fig. 2d: die Transportvorrichtung der Fig. 2a in geöffnetem Zustand mit darin eingebrachten Behältnissen erster Art und Behältnissen zweiter Art,
- Fig. 3: in einer schematischen Prinzipdarstellung nach Art eines Blockschaltbildes ein Ausführungsbeispiel eines erfindungsgemäßen Systems mit zahlreichen Stationen, insbesondere mit einer Spülstation, einer ersten Übergabestation, einer Ausgabestation, einer ersten Rück-Übergabestation, einer Rücknahmestation nach Art eines Pfandautomaten und einer zweiten Rück-Übergabestation unter Veranschaulichung der Transportwege,
- Fig. 4: in einer schematischen Prinzipdarstellung ein Ausführungsbeispiel einer Spülstation des Systems nach Fig. 3,
- Fig. 5: in einer schematischen Prinzipdarstellung ein Ausführungsbeispiel einer ersten Übergabestation sowie abgeschnitten dargestellt einen Teil der Spülstation der Fig. 4,
- Fig. 6: in einer schematischen Prinzipdarstellung ein Ausführungsbeispiel einer Ausgabestation,
- Fig. 7: in einer schematischen Prinzipdarstellung ein Ausführungsbeispiel einer ersten Rück-Übergabestation,
- Fig. 8: in einer schematischen Prinzipdarstellung ein Ausführungsbeispiel einer Rücknahmestation nach Art eines Pfandautomaten,
- Fig. 9: in einer schematischen Prinzipdarstellung ein Ausführungsbeispiel einer weiteren Rück-Übergabestation,
- Fig. 10a: in einer Darstellung gemäß Fig. 1a die Essschale, an der eine eindeutige Kennung angeordnet ist,
- Fig. 10b: den Becher der Fig. 1b mit der Besonderheit, dass dieser über eine eindeutige Kennung identifizierbar ist,
- Fig. 10c: die Zweikammer-Essschale der Fig. 1c mit der Besonderheit, dass hier eine Kennung angeordnet ist, die eine eindeutige Identifizierung zulässt,
- Fig. 10d: den Pizzakarton der Fig. 1d mit der Besonderheit, dass dieser eine eindeutige Kennung aufweist,
- Fig. 10e: den Deckel der Fig. 1e mit der Besonderheit, dass dieser eine eindeutige Kennung aufweist,
- Fig. 11: ein weiteres Ausführungsbeispiel eines erfindungsgemäßen Systems unter Darstellung lediglich der Erfassungseinrichtungen und unter Darstellung mehrerer, jeweils eine eindeutige Kennung aufweisender Behältnisse, sowie eines an einen Rechner angeschlossenen zusätzlichen Computers,
- Fig. 12: einen Trinkbecher mit einer Kennung und schematisch dargestellt einem Datensatz, der mehrere Informationsfelder mit Informationen umfasst, die in Bezug zu dem Behältnis gesetzt sind,
- Fig. 13: in einer Darstellung vergleichbar der Darstellung der Fig. 12 eine Transportvorrichtung in geschlossenem, gesicherten Zustand mit einer Vielzahl von eindeutig identifizierbaren Behältnissen und in schematischer Darstellung einen dieser Transportvorrichtung zugeordneten Datensatz mit einer Vielzahl von Informationen in Bezug zu dieser Transportvorrichtung,
- Fig. 14: in einer Darstellung vergleichbar der Darstellung der Figur 3 ein weiteres Ausführungsbeispiel eines erfindungsgemäßen Systems in einer Prinzipdarstellung nach Art eines Blockschaltbildes, wobei in diesem System ein Zwischenlager mit zahlreichen Stellplätzen für Transportvorrichtungen mit ungespülten Behältnissen oder mit gespülten Behältnissen vorgesehen ist, unter Veranschaulichung bezüglich des Systems nach Fig. 3 geänderter bzw. alternativer Transportwege,
- Fig. 15: in einer vereinfachten Prinzipansicht ein Ausführungsbeispiel eines Zwischenlagers, eine Bedienperson, eine Erfassungseinrichtung, und eine Zugangskontrolleinrichtung, wobei das Zwischenlager fünfzehn Stellplätze für Transportvorrichtungen aufweist, wobei drei der Stellplätze schematisch mit geöffneter Tür dargestellt sind, indem sie einen Blick auf die in den Stellplätzen befindlichen Transportvorrichtungen zulassen,
- Fig. 16: in einer perspektivischen schematischen Prinzipdarstellung ein weiteres Ausführungsbeispiel einer erfindungsgemäßen Transportvorrichtung, in Form einer im Wesentlichen quaderförmigen, nach oben hin offenen Kiste, die ohne Deckel dargestellt ist,
- Fig. 17: in einer perspektivischen Schrägansicht in Alleindarstellung einen Deckel für die Transportvorrichtung der Fig. 16,
- Fig. 18: in einer Darstellung gemäß Fig. 16 das Ausführungsbeispiel der Transportvorrichtung der Fig. 16 mit Kiste und Deckel im montierten Zustand,
- Fig. 19: die Transportvorrichtung der Fig. 16 in Draufsicht, etwa gemäß Ansichtspfeil XIX in Fig. 16,
- Fig. 20: den Deckel der Fig. 17 in Draufsicht etwa gemäß Ansichtspfeil XX in Fig. 17,
- Fig. 21: den Deckel der Fig. 20 in einer schematischen teilgeschnittenen Seitenansicht, etwa entlang Ansichtspfeil XXI in Fig. 20,
- Fig. 22: in einer schematischen, teilgeschnittenen Ansicht, einen Schnitt durch einen Verbindungsbereich zwischen Deckel und Kiste einer Transportvorrichtung gemäß Fig. 18 im montierten Zustand, etwa entlang der Schnittlinie XXII-XXII in Fig. 18,
- Fig. 23: in einer Darstellung gemäß Fig. 22 den Verbindungsbereich der Fig. 22, unter zusätzlicher Darstellung einer Plombe mit einer Sicherung,
- Fig. 24: in einer schematischen, teilgeschnittenen Ansicht ein Verriegelungselement am Deckel in einem an einem Kragen der Kiste befestigten Zustand etwa unter Betrachtung des Teilkreises XXIV in Fig. 21, wobei die Darstellung der Fig. 24 gegenüber der Darstellung der Fig. 21 geändert ist, und
- Fig. 25: in einer Darstellung gemäß Fig. 16 die Kiste der Fig. 16 und zusätzlich eine Positionierhilfe in Form eines Rasterelementes zum Einsatz in die Transportvorrichtung der Fig. 16.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

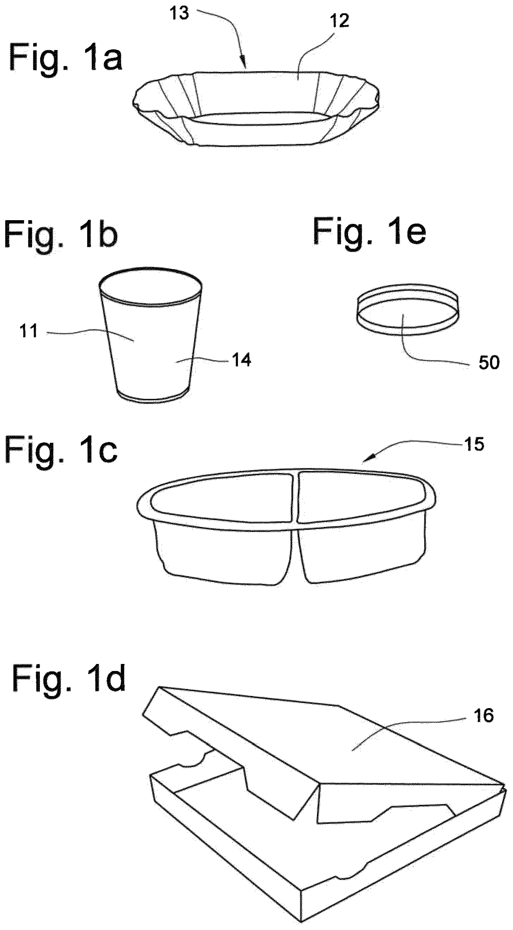

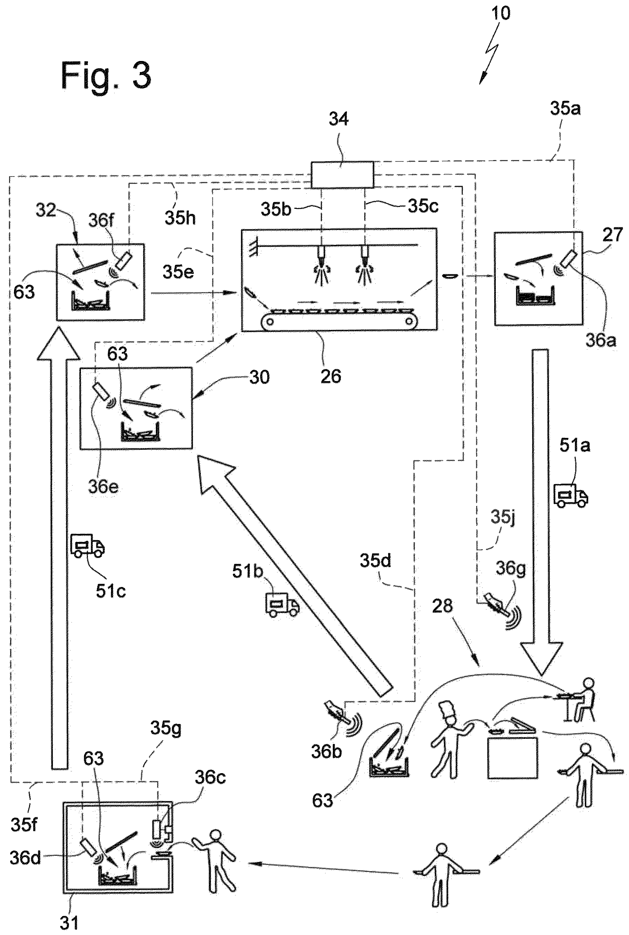

Ein erstes Ausführungsbeispiel eines erfindungsgemäßen Systems 10 ist in Fig. 3 dargestellt. Zunächst soll anhand der Figuren 1a bis 1e beispielhaft erläutert werden, welche Behältnisse 11, 12 von dem System 10 zirkuliert werden können:
Fig. 1b zeigt ein erstes Ausführungsbeispiel eines Behältnisses 11 erster Art in Form eines Trinkbechers 14. Der Trinkbecher kann einen in Fig. 1e dargestellten Deckel 50 aufweisen, muss das aber nicht.

Fig. 1a zeigt ein erstes Ausführungsbeispiel eines Behältnisses 12 zweiter Art. Dieses zweite Behältnis 12 ist als Essschale 13 ausgebildet, beispielsweise in Art, Form und Größe einer herkömmlichen Pommes Frites Schale.

Die Schale 13 ist als Einkammerschale ausgebildet. Von der Erfindung sind auch Behältnisse umfasst, die als Mehrkammerschale 15 ausgebildet sind. Fig. 1c zeigt eine zwei Kammern aufweisende Essschale 15. Von der Erfindung sind freilich auch Essschalen umfasst, die nicht dargestellt sind, die mehr als zwei Kammern aufweisen.

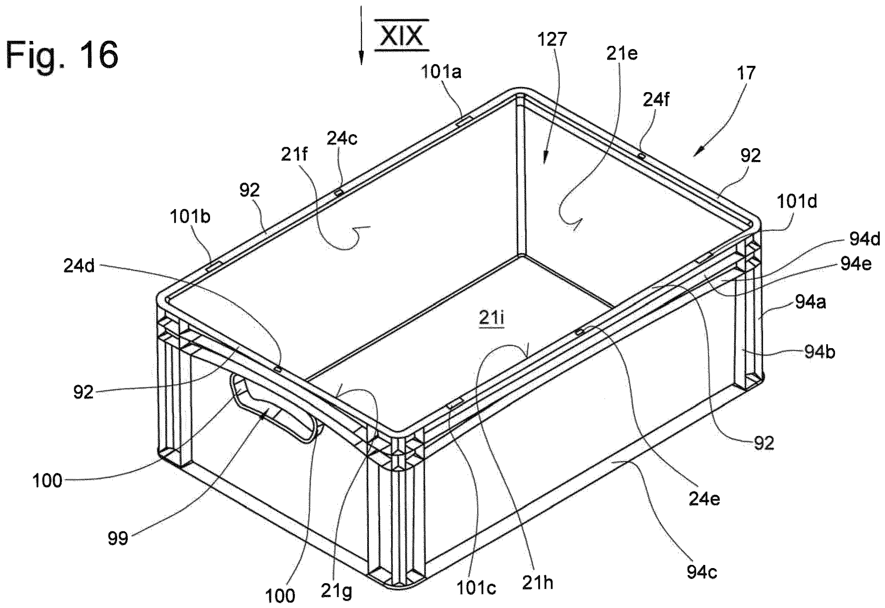

Fig. 16 zeigt ein Pizzabehältnis 16, das ebenfalls als Behältnis im Sinne des Systems 10 eingesetzt wird.

Sämtliche Behältnisse der Figuren 1a bis 1e bestehen aus Kunststoff, sind mehrwegfähig und spülfähig. Ein Pizzabehältnis gemäß Fig. 16 kann - anders als in Fig. 1d angedeutet - auch mit einem lösbaren Deckel ausgestattet sein.

Die Behältnisse 11 erster Art und die Behältnisse 12 zweiter Art sind bei dem erfindungsgemäßen System 10 im Wesentlichen herkömmlichen Einwegbehältnissen - ihrer Form und Größe nach - nachempfunden.

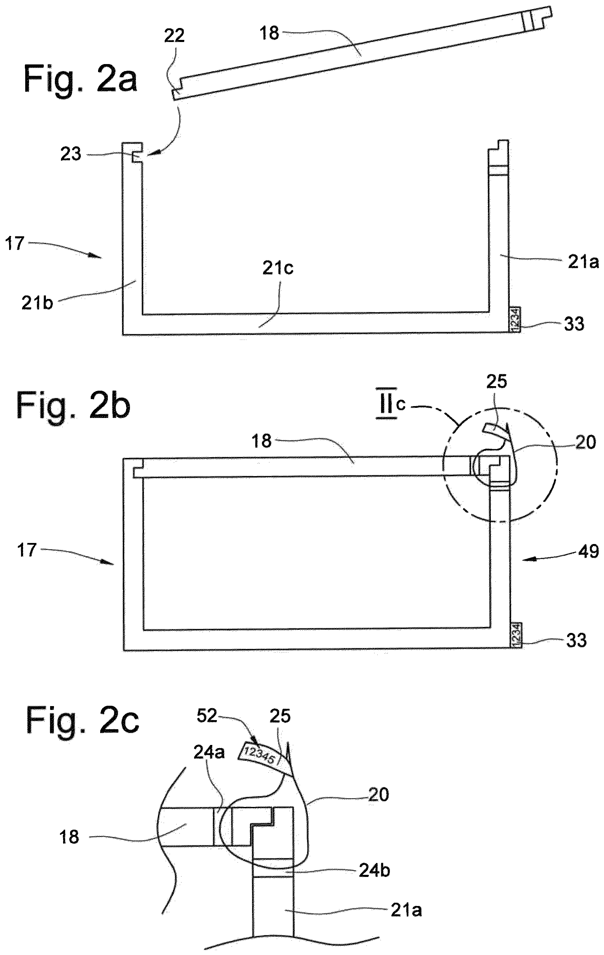

Anhand der Figuren 2a bis 2d soll nun ein Ausführungsbeispiel einer erfindungsgemäßen Transportvorrichtung 17 erläutert werden:
Die Transportvorrichtung ist als im Wesentlichen quaderförmige Kiste ausgebildet und umfasst eine Bodenwand 21c und vier Seitenwände, von denen nur die Seitenwände 21a und 21b dargestellt sind. Das Behältnis umfasst einen Deckel 18, der vollständig von der Transportvorrichtung 17 lösbar ist. Fig. 2a zeigt den Deckel 18 bei leerer Transportvorrichtung 17 in einem von der Transportvorrichtung gelöstem Zustand.

Der Deckel 18 ist an der Transportvorrichtung 17 festlegbar und ermöglicht eine Überführung der Transportvorrichtung in einen gesicherten, verschlossenen Zustand.

Fig. 2b zeigt einen gesichert geschlossenen Zustand der Transportvorrichtung 17.

Der Deckel 18 kann beispielsweise einen Vorsprung 19 aufweisen, der in eine Ausnehmung 23 am oberen Rand der Wand 21b eingreift.

Im Bereich des Teilkreises IIc in Fig. 2b weisen die Kontaktbereiche von Deckel 18 und Wand 21b Anlagenflächen auf, die zum Beispiel als Schulterflächen ausgebildet sind. Hier ist ein zum Beispiel sattes Aufliegen des Deckels 18 an der Transportvorrichtung 17 möglich.

Im Bereich von Deckel 18 und Wand 21a können Durchbrüche 24a, 24b angeordnet sein, die von einer Sicherung 20, die zum Beispiel seilförmig oder schnurförmig ausgebildet ist, durchgriffen werden kann. Die Sicherung 20 kann mit einer Plombe 25 verschlossen sein. Die Plombe 25 kann zum Beispiel eine eindeutige Kennung 52 aufweisen, die in Fig. 2c durch eine Seriennummer angedeutet ist.

Wenn der Deckel 18 an der Transportvorrichtung 17 befestigt ist und die Sicherung 20 mit Plombe 25 angebracht ist, befindet sich die Transportvorrichtung 17 in einem gesicherten, geschlossenen Zustand. Der Innenraum der Transportvorrichtung 17 ist dann nicht zugänglich, jedenfalls nicht, ohne die Plombe und/oder die Sicherung zu zerstören.

Die Transportvorrichtung 17 dient zur Aufnahme einer Vielzahl von Behältnissen 11 erster Art und von Behältnissen 12 zweiter Art.

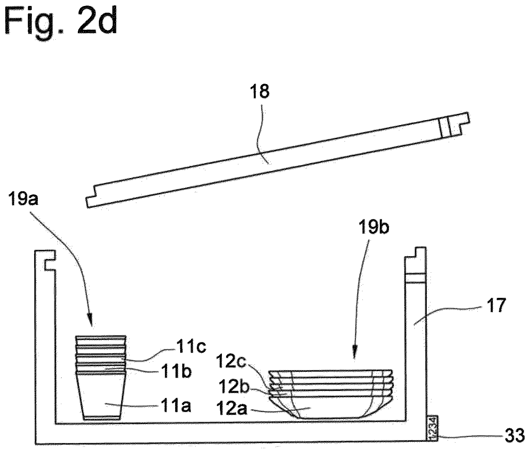

Fig. 2d zeigt lediglich beispielhaft einen ersten Stapel 19a von Behältnissen 11a, 11b, 11c erster Art und einen zweiten Stapel 19b von Behältnissen 12a, 12b, 12c zweiter Art. Nach dem Einbringen gespülter oder ungespülter Behältnisse 11, 12 in die Transportvorrichtung 17 kann die Transportvorrichtung 17 der Fig. 2d in einen gesicherten, geschlossenen Zustand gemäß 2b überführt werden. Im gesicherten, geschlossenen Zustand verhindert die Transportvorrichtung 17 eine unbefugte Entnahme der Behältnisse 11, 12 aus dem Innenraum.

Die Behältnisse 11, 12 weisen einen Pfandwert auf. Ein Diebstahlschutz oder Missbrauchsschutz der Transportvorrichtung 17 ist daher förderlich.

Anhand des Ausführungsbeispiels der Fig. 3 soll ein Ausführungsbeispiel eines erfindungsgemäßen Systems 10 zunächst im Überblick dargestellt und beschrieben werden:
Das System 10 umfasst einen Rechner 34, der von einem Prozessor oder von einem Computer bereitgestellt sein kann. Der Rechner 34 kann eine Zentrale des Systems sein. Von der Erfindung ist auch umfasst, wenn das System mehrere Rechner umfasst, die miteinander verbunden sind. Das System kann auch dezentral organisiert sein. Entscheidend ist, dass die nachfolgenden, im Einzelnen zu erläuternden Informationen alle verarbeitet werden.

Der Rechner 34 ist mit einer Vielzahl von Stationen 26, 27, 28, 30, 31, 32 verbunden. Der Rechner 34 ist darüber hinaus mit einer Vielzahl von Erfassungsgeräten oder Erfassungseinrichtungen 36, 36a, 36b, 36c, 36d, 36e, 36f, 36g verbunden.

Die Verbindung zwischen Rechner und Erfassungsgeräten oder Stationen kann unter Zuhilfenahme von Signalleitungen oder Verbindungsleitungen 35, 35a, 35b, 35c, 35d, 35e erfolgen. Die Verbindungsleitungen können kabelgebunden oder drahtlos sein.

Die Erfassungsgeräte können stationär angeordnet ein, zum Beispiel nahe der Station angeordnet sein. Sie können aber auch mobil ausgebildet sein, wie dies beispielsweise die Handgeräte in Fig. 3 und mit den Bezugszeichen 36b, 36g bezeichnet andeuten. Die mobil ausgebildeten Erfassungsgeräte können beispielsweise von Transportdienstleistungsmitarbeitern gehandhabt und mitgenommen werden.

Fig. 3 zeigt eine Spülstation 26, an der Behältnisse gespült werden, eine erste Übergabestation 27, an der gespülte Behältnisse in gespülte Transportvorrichtungen 17 eingebracht werden, eine Ausgabestation 28, zum Beispiel einen Gastronomiebetrieb, in dem die Behältnisse mit Speisen und Getränken befüllt werden, eine erste Rück-Übergabestation 30, an der die mit ungespülten, das heißt zum Beispiel Speiseresten befüllten Mehrwegbehältnisse 11, 12, 13 aus der Transportvorrichtung 17 entnommen werden, um der Spüleinrichtung 26 zugeführt zu werden, eine Rücknahmestation 31, zum Beispiel in Form eines Pfandrückgabeautomaten, in dem ungespülte Behältnisse 11, 12, 13 einer Transportvorrichtung 17 zugeordnet werden, und eine zweite Rück-Übergabestation 32, an der von der Rücknahmestation 31 stammende Transportvorrichtungen 17 mit ungespülten Behältnissen 11, 12, 13 entnommen werden.

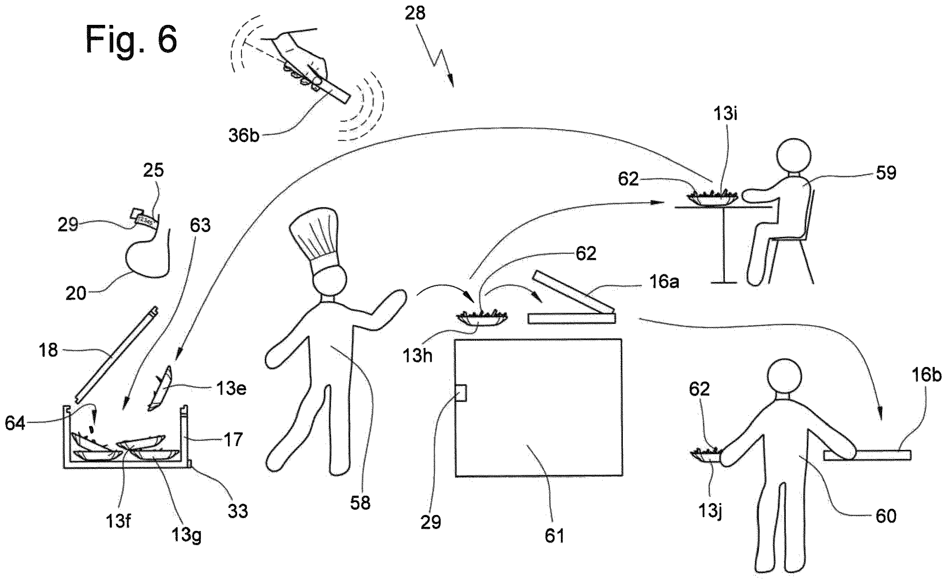

Angemerkt sei, dass jede Ausgabestation 28 eine eigene Identifikationsnummer 29 (vgl. Fig. 6) aufweisen kann, anhand der sie identifizierbar ist. Die Identifikationsnummer kann jede Art von Codenummer, alphanummerischer Code oder dergleichen sein, der eine Identifizierung der Ausgabestation 28 ermöglicht.

Jede Transportvorrichtung 17 weist eine Kennung 33 auf, die eine Identifizierung der einzelnen Transportvorrichtung 17 ermöglicht. Die unterschiedlichen Transportvorrichtungen 17 sind also voneinander unterscheidbar. Wiederum kann die Kennung 33 an einer Transportvorrichtung 17 eine Seriennummer, ein alphanummerischer Code, QR-Code, 2D-Barcode, DataMatrix, 3D-Barcode, RFID-Tag oder irgendeine andere, insbesondere maschinell auslesbare Zahlen-Buchstaben oder logische Folge sein, die eine Identifizierung einer bestimmten Transportvorrichtung 17 ermöglicht.

Bei den Ausführungsbeispielen der Figuren 1 bis 9 sind die einzelnen Behältnisse 11 erster Art und Behältnisse 12 zweiter Art zwar als Behältnis einer bestimmten Art identifizierbar, aber Behältnisse einer Art sind voneinander nicht unterscheidbar, also nicht identifizierbar.

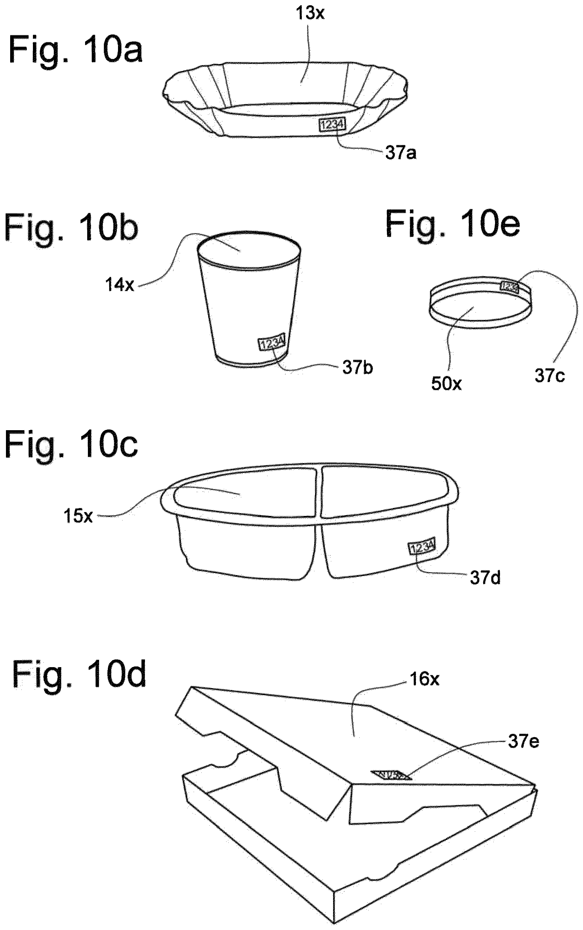

Eine Identifizierbarkeit einzelner Behältnisse ist später bei den Ausführungsbeispielen der Figuren 10a bis 13 erläutert, auf die erst nachfolgend eingegangen wird.

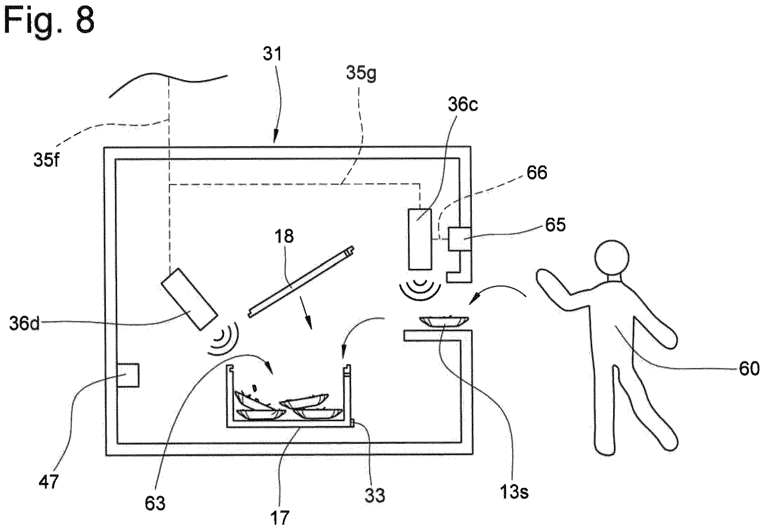

Die Rücknahmestation 31 ist ebenfalls durch eine eindeutige Kennung, den sogenannten Code 47 (vgl. Fig. 8) identifizierbar.

Die zuvor beschriebene Plombe 25 ist über eine eigene Kennung 52 identifizierbar. Bestimmten Ausgabestationen 28 können bestimmte Plomben 25 mit vorbekannten Kennungen 52 zugeordnet werden, so dass beispielsweise in einem Gastronomiebetrieb Plomben 25 mit einem bestimmten Seriennummernbereich vorhaltbar sind. Der Gastronom kann dann aus seinem Nummernkreis Plomben 25 anbringen, so dass bei einer Rückgabe einer Transportvorrichtung 17 mit ungespülten Behältnissen 11, 12, die von einer bestimmten Ausgabestation 28 stammen, anhand der Kennung 52 der Plombe 25 festgestellt werden kann, von welchem Gastronomiebetrieb oder von welcher Ausgabestation 28 das Pfandgut stammt.

Anhand der Fig. 3 sollen zunächst die Zusammenhänge grob erläutert werden: Ein Spülen der Behältnisse 11, 12 findet an der Spülstation 26 statt.

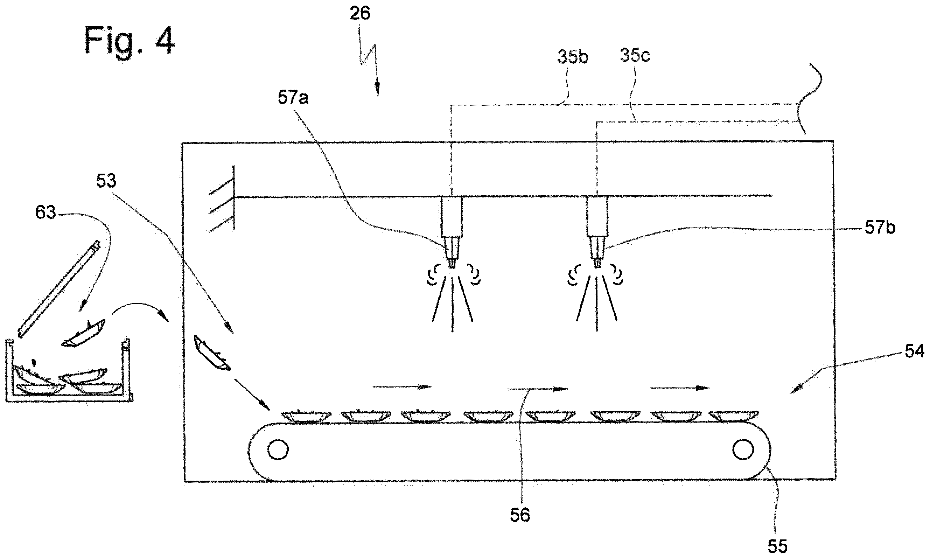

Fig. 4 erläuterte eine solche Spülstation 26, die eine Reinigung von Behältnissen 11, 12, 13 unter Zuhilfenahme von verschiedenen Bearbeitungsstationen 57a, 57b durchführen kann.

Die Behältnisse können verschiedene Reinigungs-, Wasch- und Trockungszonen durchlaufen, die im Einzelnen nicht dargestellt sind. Einige Bearbeitungsstationen 57a, 57b, können auch über Signalleitungen 35b, 35c mit dem Rechner 34 verbunden sein.

Fig. 4 stellt ein Förderband 55 dar und veranschaulicht eine Förderrichtung 56, entlang der eine Bearbeitung der zu spülenden Behältnisse 11, 12 innerhalb der Spülstation 26 erfolgt. Die Spülstation 26 weist einen Einlass 53 für ungespülte Behältnisse 11, 12 und einen Auslass 54 für gespülte Behältnisse auf.

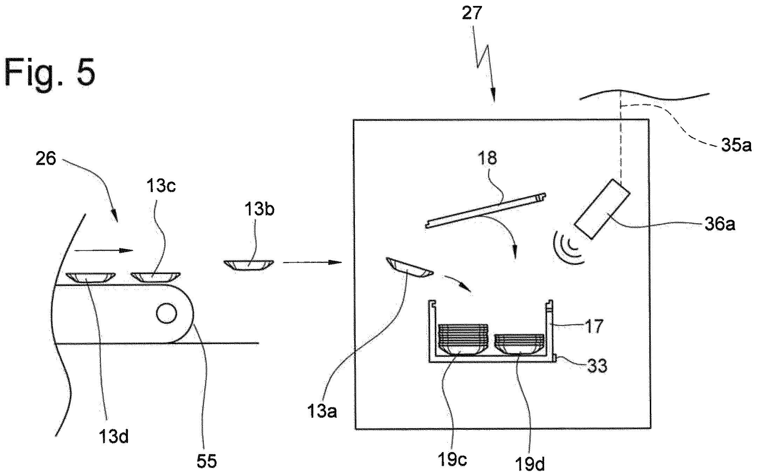

Die Spülstation 26 übergibt gespülte Behältnisse - und gespülte Transportvorrichtungen 17 -, wie dies in Fig. 5 dargestellt ist, an eine Übergabestation 27. Dort werden, wie die beiden Stapel 19c, 19d in Fig. 5 andeuten, die Behältnisse 11, 12 platzsparend und gestapelt im Innenraum der Transportvorrichtung 17 untergebracht.

Nach dem Einbringen der gespülten Behältnisse wird die Transportvorrichtung 17 durch Anbringung des Deckels 18 geschlossen und sodann mit einer Sicherung 20 gesichert. Die Sicherung kann zum Beispiel wiederum plombiert werden. Die Transportvorrichtung 17 befindet sich dann in einem gesicherten, verschlossenen Zustand. Ein Zugang zu dem Innenraum der Transportvorrichtung 17 und eine Entnahme der gespülten Behältnisse 11, 12, 13 ist nicht möglich, ohne die Sicherung 20 oder die Plombe 25 zu beschädigen oder zu zerstören.

Fig. 5 deutet eine Erfassungseinrichtung 36a an. Die Erfassungseinrichtung 36a ist dazu ausgebildet, der Transportvorrichtung 17, unter Berücksichtigung ihrer eindeutigen Kennung 33, Informationen zuzuordnen, zum Beispiel Informationen darüber, wie viele Behältnisse welcher Art sich im Innenraum der Transportvorrichtung 17 befinden.

Die Erfassung dieser Daten kann durch das Erfassungsgerät 36a entweder automatisch oder teilautomatisch oder manuell erfolgen. Vorteilhaft ist vorgesehen, dass die Kennung 33 der Transportvorrichtung 17 maschinell auslesbar ist, und beispielsweise durch Einlesen eines Barcodes oder alphanummerischen Codes oder unter Zuhilfenahme von Tags oder RFID-Elementen oder anderen geeigneten Informationsübermittlungselementen und -methoden, wie zum Beispiel auch NFC, auslesbar ist. Damit kann der Erfassungseinrichtung 36 die Information über die Kennung 33 vorteilhaft automatisiert mitgeteilt werden.

Die Art der eingebrachten Behältnisse und deren Zahl kann manuell, gegebenenfalls aber auch automatisch erfasst werden. Wesentlich für die Erfindung ist, dass eine Information erfasst wird, die es erlaubt, den aufsummierten Rückgabepfandwert zu ermitteln.

All diese Informationen können von dem Erfassungsgerät 36a über die Verbindungs- oder Signalleitung 35a an den Rechner 34 übermittelt werden.

Fig. 3 deutet ein Fahrzeug 51a zum Transport der Transportvorrichtung 17 mit den gespülten Behältnissen an. Damit erfolgt ein Transport von der Übergabestation 27 zu einer Ausgabestation 28. Eine Ausgabestation 28 kann, wie beispielsweise in Fig. 6 verdeutlicht, zum Beispiel ein gastronomischer Betreib sein, zum Beispiel eine Imbissbude, eine Kantine, eine Bäckerei, ein Pizzalieferdienst, eine Tankstelle, eine Selbstbedienungs-Theke, z. B. in einem Supermarkt, oder dergleichen. Von der Erfindung ist umfasst, wenn eine Ausgabestation 28 einen Verzehr vor Ort zulässt, wie beispielsweise durch die Person 59 angedeutet, als auch eine Mitnahme von Speisen, wie durch den Gast 60 illustriert.

Nach dem Transport der Kiste 17 mit den gespülten Behältnissen zu der Ausgabestation 28 kann die Übergabe durch ein Erfassungsgerät 36g (vgl. Fig. 3) protokolliert werden und die Information kann über eine Signalleitung 35 an den Rechner 34 übermittelt werden.

Freilich kann alternativ eine protokollierte Übergabe auch mittels eines Lieferscheines durch den Lieferanten erfolgen.

Der Gastronom, dargestellt beispielhaft durch einen Koch 58, kann die Transportvorrichtung 17 öffnen, indem beispielsweise die Sicherung 20 durchschnitten wird. Nach Öffnung können die gespülten Behältnisse 11, 12, 13, 16b entnommen werden und stehen für eine Befüllung mit Lebensmitteln zur Verfügung.

In herkömmlicher Weise könnten die Mehrwegbehältnisse nun zur Aufnahme von Speisen verwendet werden. Fig. 6 zeigt mit den Bezugszeichen 13h, 13i, 13j und 16b bezeichnet, mit Speisen befüllte Behältnisse.

Nach dem Verzehr der Speisen besteht grundsätzlich die Möglichkeit, dass der Gast 59 das Mehrwegbehältnis 13i dem Gastronom zurückgibt, der Gastronom dieses selbst spült und es dann selber verwendet. Es besteht aber auch die Möglichkeit, dass nach dem Verzehr des Lebensmittel die Schale 13i ungespült der in Fig. 6 mit dem Bezugszeichen 17 bezeichneten Transportvorrichtung 17 zugeführt wird.

Fig. 6 zeigt in der Kiste 17 mehrere ungespülte Behältnisse 13f, 13g, die in ihrer Gesamtheit als ungespülte Behältnisse 63 bezeichnet werden, und die teilweise Speisereste 64 enthalten können.

Wenn ein gewisser Grad an Befüllung der Transportvorrichtung 17 mit ungespülten Behältnissen 13 erreicht ist oder nach Verstreichen einer bestimmten Zeitspanne, zum Beispiel einmal täglich, kann der Gastronom - oder ein Mitarbeiter des Systems - die Transportvorrichtung 17 in einem gesichert, geschlossenen Zustand überführen. Hierzu kann wiederum eine Sicherung 20 mit einer Plombe 25 mit einer eindeutigen Kennung 52 und/oder mit einer Identifikationsnummer 29 der Ausgabestation 28 verwendet werden. Eine Identifikation der Ausgabestation 28 kann auch mittelbar über die zuvor beschriebenen Seriennummernbereiche der Plomben ermittelt werden.

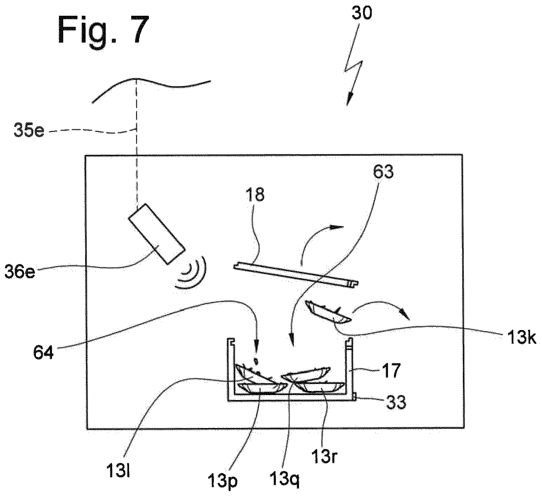

Fig. 3 zeigt, dass mit ungespülten Behältnissen gefüllte Transportvorrichtung durch das Transportfahrzeug 51b zu einer Rück-Übergabestation 30 transportiert werden können. Eine solche Station 30 ist in Fig. 7 dargestellt.

An einer Rück-Übergabestation 30 kann das Transportbehältnis protokolliert, sozusagen unter den Augen der Erfassungseinrichtung 36e, geöffnet werden. Jedenfalls ist die Erfassungseinrichtung 36e dazu ausgebildet, automatisch, teilautomatisch, oder manuell eine Information über eine Rückgabe der Transportvorrichtung 17 mit darin angeordneten ungespülten Behältnissen 13l, 13p, 13q, 13r zu erfassen. Dazu wird beispielsweise der Pfandwert der aus der Transportvorrichtung 17 zu entnehmenden Behältnisse, insbesondere der aufsummierte Pfandwert ermittelt und erfasst. Diese Information kann über die Leitung 35e an den Rechner 34 übermittelt werden.

In Kenntnis dieser Information kann von dem System 10 oder von den bearbeitenden Personen eine Erstattung des aufsummierten Rückgabe-Pfandwertes an den Gastronom der Ausgabestation 28 veranlasst werden. Sodann können die ungespülten Behältnisse der Spülstation 26 für eine erneute Spülung zur Verfügung gestellt werden, so dass sie nach Spülen wieder dem Kreislauf zugeführt werden können.

Fig. 3 deutet auch an, dass eine Rückgabe eines ungespülten Mehrwegbehältnisses auch an einer Rücknahmestation 31 möglich ist. Eine solche ist in Fig. 8 anhand eines Ausführungsbeispiels dargestellt:
Tatsächlich umfasst das System viele solcher Rückgabe-Stationen.

Gemäß Fig. 8 ist die Rücknahmestation 31 nach Art eines Pfandautomaten ausgebildet. Ein Gast 60, der zuvor in einem Gastronomiebetrieb 28 Mehrwegbehältnisse mit Speisen erworben hat, diese aber nicht an der Ausgabestation 28 zurückgeben kann oder zurückgeben möchte, hat die Möglichkeit, an einer Rücknahmestation 31 die ungespülten Behältnisse, zum Beispiel die Essschale 13s, zurückzugeben.

Hier wird über eine Erfassung durch ein Erfassungsgerät 36c zunächst erfasst, ob das Mehrwegbehältnis 13s überhaupt dem System zugehörig ist. Es kann bezüglich seiner Art erkannt werden. Eine Erkennung kann zum Beispiel durch Scannen oder Messen der Form, der Größe, des Gewichtes oder auch besonderer technischer Merkmale, gegebenenfalls auch Informationscode etc. erfolgen.

Nach erfolgreicher Erkennung kann von der Station 31 eine Auszahlung des Pfandbetrages, nämlich des Rückgabepfandbetrages, veranlasst werden. Hierfür ist eine Einrichtung zur Rückgabepfandausgabe 65 vorgesehen. Die Auszahlung kann in bar oder elektronisch auf ein Konto, ein Handy, ein Endgerät oder dergleichen erfolgen.

In der Rücknahmestation 31 kann das ungespülte Mehrwegbehältnis 13s einer Transportvorrichtung 17 zugeführt werden.

In der Rücknahmestation 31 kann, insbesondere falls der Rücknahmeautomat vollautomatisch ausgebildet ist, z. B. auch eine automatische Vorsortierung oder Sortierung der Mehrwegbehältnisse 13 erfolgen. Alternativ kann in der Rücknahmestation 31 aber auch eine manuelle oder teilweise manuelle Sortierung erfolgen. Eine Vorsortierung oder Sortierung der Mehrwegbehältnisse 13 kann z. B. auf einem Sortierband oder unter Zuhilfenahme einer Sortiereinrichtung erfolgen.

Wenn eine bestimmte Befüllung dessen erreicht ist oder zu regelmäßigen Zeitpunkten, zum Beispiel täglich, kann die Transportvorrichtung 17 abgeholt werden. Das Fahrzeug 51c in Fig. 3 verdeutlicht den Transport der Kiste 17, befüllt mit ungespülten Behältnissen, zu einer zweiten Rück-Übergabestation 30.

Beim Abholen der Transportvorrichtung 17 an der Rücknahmestation 31 kann über eine Erfassungseinrichtung 36d bereits eine Erfassung der Art und der Zahl der Behältnisse erfolgen, die in der Transportvorrichtung 17 aufgenommen werden.

Es ist aber auch von der Erfindung umfasst, wenn eine solche Erfassung zum jetzigen Zeitpunkt nicht an der Rücknahmestation 31, sondern erst oder zusätzlich an der Rück-Übergabestation 32 erfolgt.

Im Zuge der Abholung der Transportvorrichtung 17 an der Rücknahmestation 31 kann über die Erfassungseinrichtung 36d die Kennung der Transportkiste und unmittelbar und mittelbar die Kennung 47 der Rücknahmestation 31 erfasst werden.

Wenn das Fahrzeug 51c beladen ist, weiß das System 10, nämlich in Form des Rechners 34, dass eine bestimmte, mit einer identifizierbaren Kennung versehene Transportkiste 17 von der Rücknahmestation 31 stammt.

Wenn die Transportvorrichtung 17 befüllt mit ungespülten Behältnissen 11, 12, an einer Rück-Übergabestation 32 ankommt, kann - ähnlich wie bei dem zuvor beschriebenen Prozess - an der Rück-Übergabestation 32 die Transportvorrichtung 17 geöffnet werden.

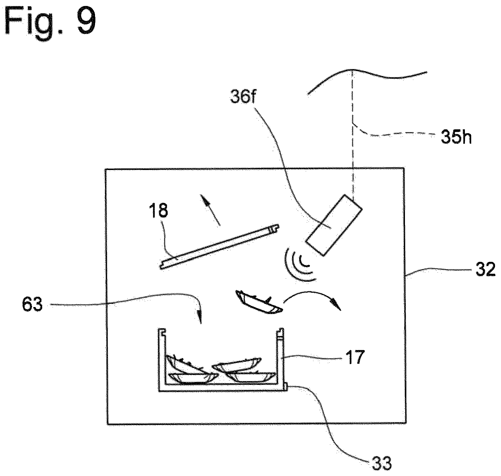

Fig. 9 macht deutlich, dass über eine Erfassungseinrichtung 36f die Art und Zahl der Behältnisse 11 und damit auch der aufsummierte Rückgabepfand erkannt werden kann. Wiederum ist eine Erfassung dieser Information über die Erfassungseinrichtung 36f vollautomatisiert, teilautomatisiert oder manuell möglich. Wiederum werden sodann die ungespülten Behältnisse an die Spülstation 26 übergeben.

Die erwähnten beiden Rück-Übergabestationen 30, 32 können auch von einer gemeinsamen Station bereitgestellt sein.

Entscheidend ist, dass Transportvorrichtungen 17 mit ungespülten Behältnissen, die von Rücknahmestationen 31 stammen, deren Rückgabepfandbeträge bereits ausgezahlt sind, wohin bei Transportvorrichtungen 17 mit ungespülten Behältnissen 11, 12, die von einer Ausgabestation 28 stammen, die Rückgabepfandbeträge in der Regel nicht ausgezahlt sind, sondern erst nachfolgend überwiesen werden. Die Rück-Übergabestation 30, 32 müssen daher eine entsprechende Unterscheidung treffen können.

Anhand der Figuren 10a bis 10e soll nun bei einem weiteren Ausführungsbeispiel der Erfindung verdeutlicht werden, dass jedes einzelne der Behältnisse 11, 12, 13x, 14x, 50x, 15x, 16x, 14z, 14w, 14e, 14m, 13o, 13m, 13n eine eigene eindeutige Kennung 37a, 37b, 37c, 37d, 37e, 37z, 37w, 37j, 37i aufweisen kann, die eine Identifizierbarkeit eines bestimmten Behältnisses ermöglicht.

Wiederum kann die Kennung maschinell auslesbar sein, zum Beispiel in Form eines Barcodes, eines Strichcodes, eines alphanummerischen Codes, eines Zeichencodes oder durch Bearbeitung der Oberfläche des Behältnisses, durch einen Aufkleber, durch eine QR-Code oder durch TAG, der zum Beispiel als RFID-Schaltkreis oder als NFC-auslesbarer Code oder dergleichen an dem entsprechenden Behältnis angebracht ist.

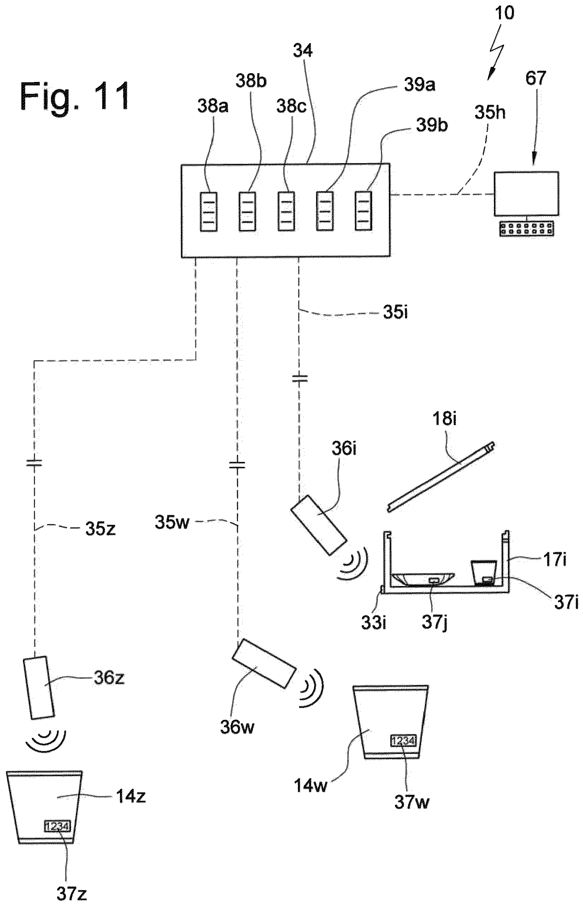

Fig. 11 zeigt ein Ausführungsbeispiel eines erfindungsgemäßen Systems 10, das ähnlich konzipiert ist, wie das Ausführungsbeispiel 10 der Fig. 1.

Fig. 11 zeigt allerdings, der Übersichtlichkeit halber, nur wesentliche Teile dieses Systems 10:
Bei dem Ausführungsbeispiel der Fig. 11 kann vorgesehen sein, dass über Erfassungseinreichungen 36i, 36w, 36z maschinell all die Informationen erfasst werden können, die bei dem Ausführungsbeispiel der Fig. 3 erfasst werden können. Zusätzlich und/oder alternativ können aber auch die Informationen über die individuellen Kennungen 37 der einzelnen Mehrwegbehältnisse erfasst werden.

Diese Informationen können über die Signalleitungen 35i, 35z, 35w an den Rechner 34 übermittelt werden.

Der Rechner 34 kann aus den erhaltenen Informationen Datensätze 38a, 38b, 38c und 39a, 39b generieren, die individuellen Kennungen 37 der einzelnen Mehrwegbehältnisse zugeordnet sind.

Diese Datensätze erlauben eine Zuordnung von Informationen zu einem bestimmten Behältnis:

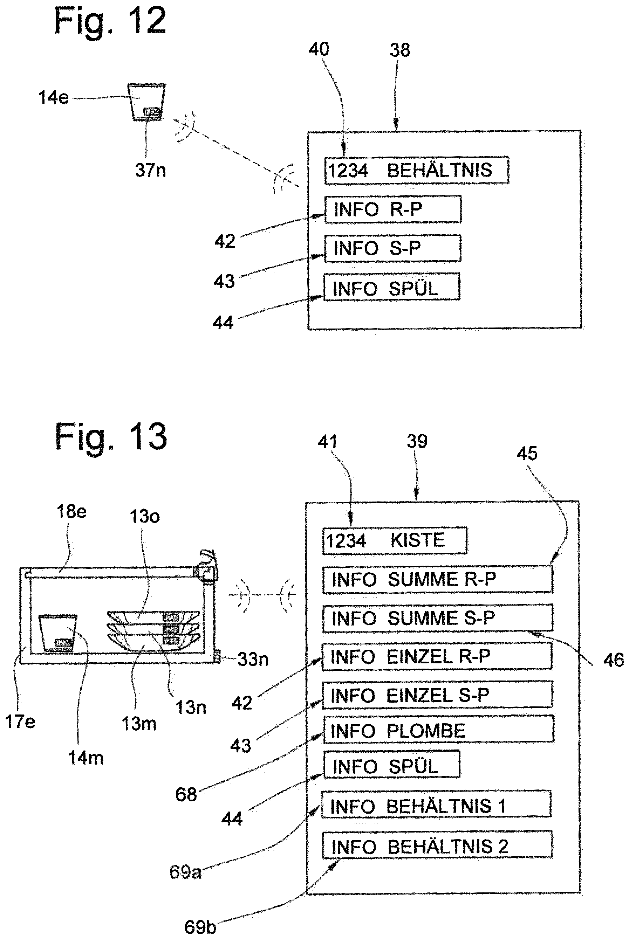

Fig. 12 macht deutlich, dass ein Datensatz 38 bezogen auf ein bestimmtes Behältnis 14e mit einer eindeutigen Kennung 37n eine Reihe von Informationen enthalten kann.

Hierzu gehören Informationen 40 über die Kennung 37n des Behältnisses oder zumindest Informationen, die sich zu einer bestimmten Kennung 37n des Behältnisses in Bezug setzen lassen.

Des Weiteren kann der Datensatz 38 Informationen 42 über einen Pfandrückgabewert dieses speziellen Behältnisses 14e aufweisen.

Auch kann der Datensatz 38 Informationen 43 über einen Spülpfandwert des Behältnisses 14e aufweisen. Dies bedeutet, dass in dem Datensatz 38 eine Information enthalten sein kann, die die Kosten für eine Spülung dieses Behältnisses angibt, oder die zu dieser Information in Bezug gesetzt ist.

Des Weiteren kann der Datensatz 38 Informationen 44 über an dem Behältnis 14e vorzunehmende Spülprozesse umfassen oder Informationen über an dem Behältnis 14e vorgenommene Spülprozesse. Beispielsweise kann dem Behältnis 14e - nachdem es die Spülstation 26 durchlaufen hat - eine Information 44 zugeordnet werden, dass der Spülprozess für das Behältnis 14e alle Anforderungen für einen Hallal-Spülprozess oder alle Anforderungen für eine koscheren Spülprozess erfüllt.

Der Datensatz 38 kann diese Information - oder Teile der Information - auch für einen Benutzer ausgebbar bereitstellen. Hierzu kann der Rechner 34 über eine Verbindungsleitung 35h mit einem Rechner 67 verbunden sein. Der Rechner 67 kann beispielsweise über Internet zugänglich sein und einem Bediener, gegebenenfalls nach Überprüfung einer Zugangsberechtigung, bei einer alternativen Ausgestaltung auch ohne Zugangsberechtigung, einen Zugriff auf diese Informationen ermöglichen.

Fig. 13 zeigt ein Ausführungsbeispiel eines Datensatzes 39, der Informationen über eine Transportvorrichtung 17e mit einer eindeutigen Kennung 33e umfasst.

In der Transportvorrichtung 17e befinden sich spezielle, bestimmte und einzeln über die eigene Kennung identifizierbare Behältnisse 14m, 13m, 13n, 13o.

So weist der Datensatz 39 eine Information 41 auf, die zu der Kennung 33n der Kiste 17e in Bezug setzbar ist oder dieser entspricht.

Des Weiteren weist der Datensatz 39 eine Information 45 über die summierten Pfandrückgabewerte sämtlicher in der Transportvorrichtung 17 befindlicher, oder daraus entnommener, gespülter oder ungespülter Behältnisse 14m, 13m, 13n, 13o auf.

Des Weiteren kann der Datensatz 39 eine Information 46 über die summierten Spülpfandwerte umfassen, all der Behältnisse, die in der Transportvorrichtung 17 aufgenommen oder die in der Transportvorrichtung 17 entnommen worden sind.

Darüber hinaus kann der Datensatz 39 noch weitere Informationen umfassen. Hierzu gehören zum Beispiel die zuvor bereits erläuterten Informationen 42, 43 und 44.

Der Datensatz 39 kann auch eine Information 68 über eine Plombe, zum Beispiel eine Kennung der Plombe, an der Transportvorrichtung 17e umfassen.

Der Datensatz 39 kann auch eine Information 69a umfassen oder eine Information 69b umfassen, die in Bezug zu einem bestimmten Behältnis 14m, 13m, 13n, 13o eine Information zu einem durchgeführten oder durchzuführenden Spülprozess umfasst.

Damit können sämtliche Informationen, die im Zuge von Spülprozessen oder vorzunehmenden Spülprozessen in einem solchen Mehrwegkreislaufsystem anfallen, von dem Rechner 34 verarbeitet, zugeordnet und bedarfsweise zur Verfügung gestellt werden.

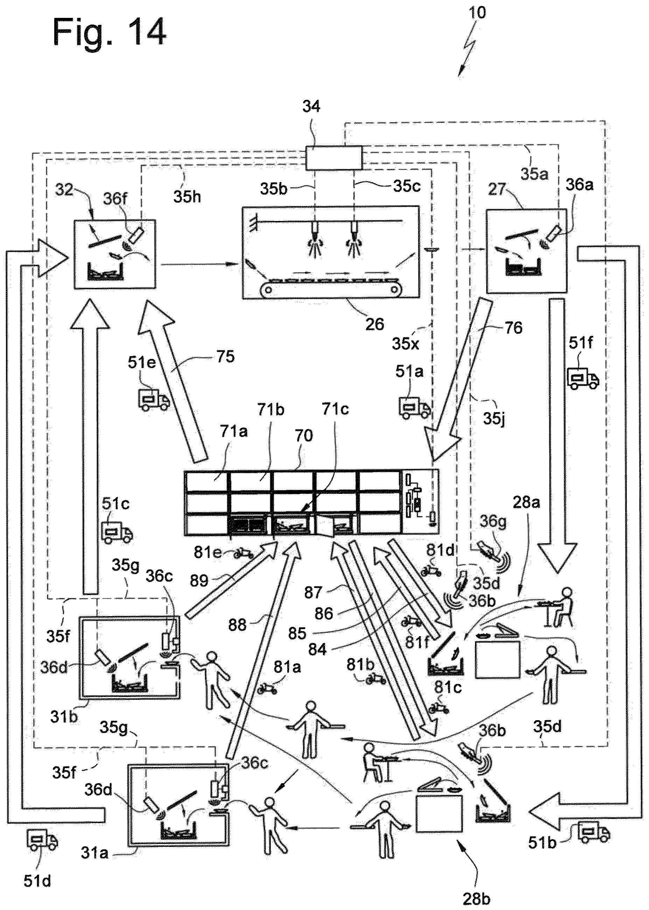

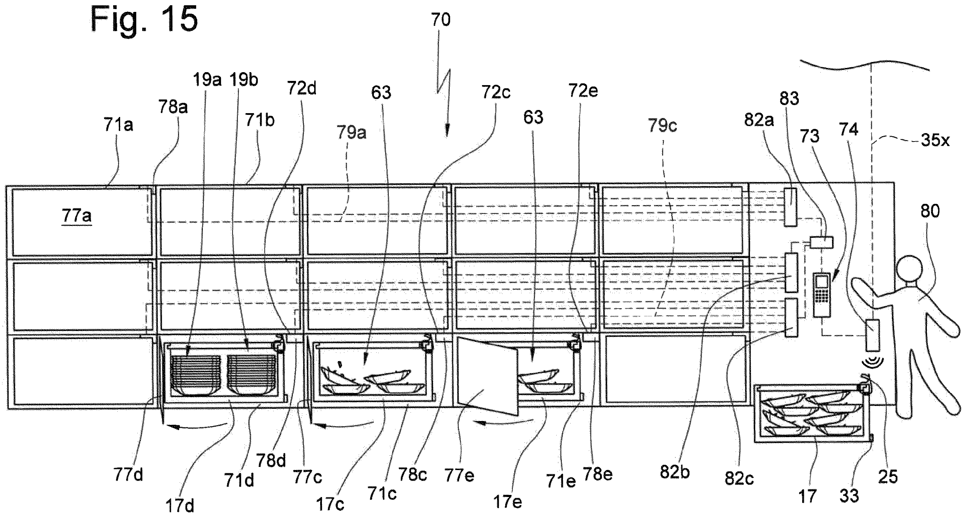

Anhand der Figuren 14 und 15 soll nun ein weiteres Ausführungsbeispiel eines erfindungsgemäßen Systems 10, eines erfindungsgemäßen Verfahrens und eines erfindungsgemäßen Zwischenlagers 70 erläutert werden.

Figur 15 zeigt ein Ausführungsbeispiel eines erfindungsgemäßen Zwischenlagers 70 in Alleindarstellung.

Das Zwischenlager 70 ist ähnlich einer Paketstation ausgebildet und umfasst eine Vielzahl von Stellplätzen 71a, 71b, 71c, 71d, 71e. Insgesamt sind bei dem Ausführungsbeispiel der Figur 15, fünfzehn Stellplätze vorgesehen.

Die Zahl der Stellplätze ist aber freilich beliebig wählbar.

Jeder Stellplatz ist von einer eigenen Tür 77a, 77b, 77c, 77d, 77e verschließbar.

Bei den drei Stellplätzen 71c, 71d, 71e sind die jeweiligen Türen 77c, 77d, 77e gemäß Figur 15 in geöffnetem Zustand dargestellt und erlauben Einblick in das jeweilige Innere. Bei den übrigen Stellplätzen des Zwischenlagers 70 der Figur 15 sind die Türen geschlossen.

Jeder Stellplatz 71a, 71b, 71c, 71d, 71e ist im Wesentlichen quaderförmig ausgebildet. Er weist eine Grundfläche auf, die größer ist als die Grundfläche einer Transportvorrichtung 17.

Insbesondere kommt eine Grundfläche in Betracht, die etwas größer ist, als 400mm x 600mm, also entsprechend einem Viertel einer Standard-Europalette.

Auch andere Maße sind möglich.

Die Höhe eines Stellplatzes 71a, 71b, 71c, 71d, 71e kann entsprechend der Höhe der Transportvorrichtung 17 gewählt werden. Beispielsweise kann die Höhe des Stellplatzes etwa 40cm, oder etwa 60cm, oder etwa 80cm betragen.

Jeder Stellplatz 71a, 71b, 71c, 71d, 71e weist eine eigene Kennung 72a, 72b, 72c auf.

Die Kennung wird von einem Rechner 83 oder einer Steuerung 83 verwaltet. Jeder Stellplatz 71a, 71b, 71c, 71d, 71e weist eine eindeutige Kennung 72a, 72b, 72c auf.

Jeder Stellplatz 71a, 71b, 71c, 71d, 71e weist darüber hinaus eine eigene Verriegelungseinrichtung 78a, 78b, 78c, 78d auf.

Diese ist mit der Steuerung 83 über Signalleitungen oder Verbindungsleitungen 79a, 79b, 79c, 79d verbunden und von dieser ansprechbar. Die Verbindung ist bei dem Ausführungsbeispiel der Figur 15 unter Zuhilfenahme von Zwischenverwaltungseinheiten 82a, 82b, 82c getroffen, die ihrerseits mit der Steuerung 83 verbunden sind. Alternativ kann die Verbindung auch unmittelbar ausgebildet sein.

Die Steuerung 83 kann über die Verbindungsleitungen 79a, 79b, 79c, 79d die einzelnen Verriegelungseinrichtungen 78a, 78b, 78c, 78d im Öffnungssinne und/ oder im Schließsinne ansprechen.

An dem Zwischenlager 70 ist eine Zugangskontrolleinrichtung 73 angeordnet. Diese weist beispielsweise ein Display und eine Tastatur auf.

Dort kann eine Bedienperson 80 beispielsweise einen Code eingeben, z.B. einen alphanumerischen Code. Den entsprechenden Code kann die Bedienperson 80 zuvor über das System, insbesondere unter Zwischenschaltung des Rechners 34, erhalten haben.

Unter Eingabe des korrekten Codes kann nach Eingabe des Codes die Steuerung 83 veranlassen, dass eine bestimmte Verriegelungseinrichtung 78c eines bestimmten Stellplatzes 71c im Öffnungssinne angesprochen wird, und eine Tür 77c zur Öffnung freigegeben wird, und die Bedienperson 80 auf diese Weise Zugang zu dem Innenraum des Stellplatzes erhält. Die Bedienperson kann dann den Stellplatz 71c entweder mit einer Transportvorrichtung 17 beschicken, oder eine in dem Stellplatz 71c befindliche Transportvorrichtung 17 aus diesem entnehmen.

Das Ausführungsbeispiel der Figur 1 zeigt in dem Stellplatz 71d eine Transportvorrichtung 17d in schematischer Darstellung, um anzudeuten, dass in dieser gespülte Behältnisse in Stapeln 19a, 19b angeordnet sind.

Zugleich zeigt Figur 15, dass in den Stellplätzen 71c und 71e jeweils eine Transportvorrichtung 17c, 17e angeordnet ist, in der ungespülte Behältnisse 63 angeordnet sind.

Freilich ist die Darstellung der Transportvorrichtung 17, 17c, 17d, 17e in Figur 15 wiederum nur schematisch und teilgeschnitten zu verstehen, da die jeweiligen Transportvorrichtungen 17, 17c, 17d, 17e eigentlich eine undurchsichtige Seitenwand aufweisen, die einen Einblick in das Innere der Transportvorrichtung 17 in der Regel nicht gestatten würden.

Das Ausführungsbeispiel der Figur 15 zeigt ein Zwischenlager 70, bei dem jeder Stellplatz 71 eine eigene Tür 77 aufweist.

Von der Erfindung sind auch nicht dargestellte Zwischenlager 70 umfasst, die im Inneren ein Fördersystem umfassen und eine einzige Eingabestation oder Ausgabestation. Dies ermöglicht, Transportvorrichtungen 17 an dem Zwischenlager 70 abzugeben, oder abzuholen, wobei ein inneres Fördersystem dazu ausgebildet ist Transportvorrichtungen 17 internen, nicht individuell zugänglichen Stellplätzen 71 zuzuführen.

Die Figur 15 zeigt auch eine Erfassungseinrichtung 74. Mit der Erfassungseinrichtung 74, die über eine entsprechende Signalleitung 35X mit dem zentralen Rechner 34 des Systems 10 verbunden ist (vgl. Fig. 14), kann eine Übergabe einer Transportvorrichtung 17 an das Zwischenlager 70 oder eine Übergabe einer bestimmten Transportvorrichtung 17 von dem Zwischenlager 70 an eine Person 80 protokolliert werden.

Die Erfassungseinrichtung 74 ist selbstverständlich auch mit der Zugangskontrolleinrichtung 73 verbunden und mit der Steuerung 83.

Für den Fall, dass die Erfassungseinrichtung 74 eine bestimmte Kennung 33 einer bestimmten Transportvorrichtung 17 erkennt, oder eine Kennung einer bestimmten Plombe 25 erkennt, ist es bei bestimmten Ausführungsbeispielen der Erfindung nicht mehr erforderlich, dass die Bedienperson 80 zusätzlich noch einen Code an der Zugangskontrolleinrichtung 73 eingeben muss.

Figur 15 zeigt eine Transportvorrichtung 17, an der eine Kennung 33 angeordnet ist. Diese Transportvorrichtung 17 wird identifiziert und die Erfassungseinrichtung 74 kann diese Kennung 33 erfassen. Der Rechner 34 kann also protokollieren, dass die Erfassungseinrichtung 74 die Kennung 33 erfasst hat. Eine entsprechende Meldung kann über die Signalleitung 35X an den Rechner 34 erfolgen.

Alternativ und/ oder zusätzlich kann vorgesehen sein, dass über die Eingabe eines Zugangscodes durch die Person 80 an der Zugangssteuerungseinrichtung 73 die entsprechenden Informationen hinterlegt oder protokolliert wird.

Von der Erfindung ist auch umfasst, wenn die Erfassungseinrichtung 74 nicht die Kennung 33 der Transportvorrichtung 17 erfasst, sondern eine Kennung der Plombe 25.

Bei einem weiteren Ausführungsbeispiel eines erfindungsgemäßen Zwischenlagers 70 kann auch vorgesehen sein, dass jedem der einzelnen Stellplätze 71a, 71b, 71c, 71d des Zwischenlagers 70 eine Erfassungseinrichtung zugeordnet ist, die eine Präsenz einer bestimmten Transportvorrichtung 17, 17c, 17d, 17e an einem bestimmten Stellplatz 71a, 71b, 71c, 71d feststellt. So kann beispielsweise sichergestellt sein, dass eine Präsenz einer Transportvorrichtung 17 in einem bestimmten Stellplatz 71 erst an den Rechner 34 gemeldet wird, wenn die Tür 77 des entsprechenden Stellplatzes 71 wieder geschlossen ist.

Das Zwischenlager 70 ist bei dem Ausführungsbeispiel der Figur 14 wie folgt in ein erfindungsgemäßes System 10 eingebettet: Von einer ersten Übergabestation 27 kann entlang dem gemeinsamen Transportweg 76 zugleich, also gebündelt, eine Mehrzahl von Transportvorrichtungen 17 mit gespülten Behältnissen zu dem Zwischenlager 70 transportiert werden und dort untergebracht werden.

Figur 14 zeigt eine erste Ausgabestation 28a und eine zweite Ausgabestation 28b, die z.B. in unterschiedlichen Stadtvierteln befindlich sein können.

Transportvorrichtungen 17 mit gespülten Behältnissen, können von der ersten Übergabestation 27 entlang dem Transportweg 76 gebündelt dem Zwischenlager 70 zugeführt werden. Die Betreiber der beiden Ausgabestationen 28a, 28b können dann die für ihre eigenen Betriebe vorgesehenen Transportvorrichtungen 17 zu einem beliebigen Zeitpunkt unabhängig voneinander abholen oder abholen lassen. Damit kann der über größere Distanzen erfolgende Transport der Transportvorrichtungen von der Übergabestation 27 zu dem Zwischenlager 70 gebündelt, also gemeinsam erfolgen. Die kürzeren Distanzen zwischen dem Zwischenlager 70 und den Ausgabestationen 28a und 28b können individuell überbrückt werden, oder durch Kuriere oder Abholdienste, z.B. auch durch Fahrradkuriere.

Eine besonders einfache Möglichkeit der Erfassung kann eine Verwendung von Leergutscheinen umfassen.

Der Betreiber der ersten Ausgabestation 28a kann z.B. zu einem beliebigen Zeitpunkt, nachdem ihm beispielsweise über das System 10 von dem Rechner 34 mitgeteilt worden ist, dass eine bestimmte Transportvorrichtung 17 mit gespülten Behältnissen in dem Zwischenlager 70 angekommen ist, entlang des Transportweges 84 eine Abholung dieser bestimmten Transportvorrichtung 17 durchzuführen oder veranlassen. Um die Abholung durchführen zu können, kann der Abholer einen Code erhalten haben oder eine Zugangsberechtigung. Dieser wird ebenfalls über das System 10 von dem Rechner 34 übermittelt, gegebenenfalls über E-Mail, Funk, SMS oder einen anderen Telekommunikationsdienst.

Für diesen Transport vom Zwischenlager 70 zu der Abgabestation 28a kann z.B. ein Transportfahrrad 81 eingesetzt werden, da hier nur Nahstrecken, also kurze Distanzen zu absolvieren sind.

Der Betreiber der Ausgabestation 28a kann entlang des Transportweges 85 eine Transportvorrichtung 17 mit ungespülten Behältnissen 63 wieder zurückbringen oder zurückbringen lassen und an das Zwischenlager 70 übergeben. Hierbei kann unter Zuhilfenahme der vorbeschriebenen Zugangskontrollvorrichtung 73 oder unter Zuhilfenahme der Erfassungseinrichtung 74 sowohl eine Übergabe an ein Zwischenlager 70 protokolliert werden, als auch eine Übergabe an einen bestimmten Stellplatz 71a, 71b, 71c, 71d, 71e initiiert und/ oder protokolliert werden.

Der Betreiber einer zweiten Ausgabestation 28b kann entlang des Transportweges 86 gleichermaßen zu einem ihm genehmen Zeitpunkt eine Transportvorrichtung 17 mit gespülten Behältnissen an dem Zwischenlager 70 abholen oder abholen lassen, bzw. zu einem beliebigen Zeitpunkt eine Transportvorrichtung 17 mit ungespülten Behältnissen 63 entlang eines Transportweges 87 dem Zwischenlager 70 zuführen.

Gleichermaßen kann von einer ersten Rücknahmestation 31a entlang des Transportweges 88 eine Rückgabe einer Transportvorrichtung 17 mit ungespülten Behältnissen 63 an das Zwischenlager 70 und von einer zweiten Rücknahmestation 31b entlang des Transportweges 89 eine Rückführung zu dem Zwischenlager 70 erfolgen. Auch hier können aufgrund der geringen Distanzen beispielsweise Transportfahrräder 81 oder andere geeignete Transportfahrzeuge eingesetzt werden.

Eine Abholung mehrerer Transportvorrichtungen 17 mit ungespülten Behältnissen 63 kann dann wiederum gebündelt entlang des Transportweges 75 durch ein geeignetes Fahrzeug 51e erfolgen. Damit kann ein gebündelter Transport zwischen Zwischenlager 70 und Rückübergabestationen 32 durchgeführt werden.

Von dem System 10 ist auch umfasst, wenn das System 10 mehrere derartige Zwischenlager 70 aufweist.

Figur 15 veranschaulicht, dass die Zugangskontrolleinrichtung 73 mit der Steuerung 83 und mit der Erfassungseinrichtung 74 verbunden ist und mit diesen kooperiert. Die Steuerung 83 kann Kennungen 33 der an das Zwischenlager 70 übergebenen Transportvorrichtung 17 verwalten und administrieren und gleichermaßen die individuellen Kennungen 32a, 32b, 32c, 32d der einzelnen Stellplätze 71a, 71b, 71c, 71d, 71e verwalten und administrieren und letztere ersteren zuordnen. Auf diese Weise weiß die Steuerung 81 immer, in welchem Stellplatz 71a, 71b, 71c, 71d, 71e sich welche Transportvorrichtung 17 befindet.

Figur 15 verdeutlicht, dass das Zwischenlager 70 dazu ausgebildet ist, sowohl eine Transportvorrichtung 17c, 17e mit ungespülten Behältnissen 63, aber gleichermaßen auch eine Transportvorrichtung 17d mit gespülten Behältnissen für eine Zwischenlagerung aufzunehmen.

Die Transportvorrichtungen 17c, 17e mit ungespülten Behältnissen 63, werden regelmäßig, beispielsweise täglich, oder mehrmals täglich, von dem Zwischenlager 70 abgeholt und zum Zwecke einer Spülung einer Rückgabestation 32 zugeführt.

Eine Ermöglichung eines Zuganges zu einem bestimmten Stellplatz 71 kann z.B. über eine Betriebsnummer erfolgen. Für eine Rückgabe einer Transportvorrichtung 17 mit ungespülten Behältnissen 63 können die Rückgebenden z.B. eine Betriebsnummer z.B. von dem Rechner 34 aus den verwalteten Stammdaten des Systems 10 erhalten.

Das Zwischenlager 70 bietet zusätzlich zu der Abholung und der Rückgabe von Transportvorrichtungen 17 für spülfähige Mehrwegbehältnisse auch die Möglichkeit eines Click und Collect. In den entsprechend groß dimensionierten Stellplätzen 71 können damit auch andere Waren gelagert und zwischengelagert, also abgeholt und zurückgegeben werden, wie dies im Handel an sich bereits bekannt ist.

Das Zwischenlager 70 ist bezüglich der Funktionalitäten Zugriffsmanagement, Bestandsmanagement, Sendungsverfolgung, Rückverfolgbarkeit, regelmäßige Reinigung und Instandsetzung sowie Instandhaltung in das System 10 integriert.

Anhand der Ausführungsbeispiele der Figuren 16 bis 24 sollen nun einige besondere Merkmale einer Transportvorrichtung 17 erläutert werden, die in dem erfindungsgemäßen System 10 und in dem erfindungsgemäßen Verfahren vorteilhaft Anwendung finden kann.

Figur 16 zeigt eine Transportvorrichtung in Form einer im Wesentlichen quaderförmigen Kiste 17. Die Kiste 17 umfasst vier Seitenwände 21e, 21f, 21g, 21h und eine Bodenwand 21i.

Eine Besonderheit besteht darin, dass sämtliche Wände 21e, 21f, 21g, 21h durchgehend ausgebildet sind und keinerlei Öffnungen oder Durchbrüche aufweisen. Damit ist diese Kiste 17 flüssigkeitsdicht ausgebildet.

Eine weitere Besonderheit besteht darin, dass die Wände 21e, 21f, 21g, 21h auf ihrer Außenseite Versteifungsrippen 94a, 94b, 94c, 94d aufweisen. Diese erlauben es, die Wände 21e, 21f, 21g, 21h und die Bodenwand 21i materialsparend dünnwandig auszubilden und dennoch die gewünschte Steifigkeit der Kiste 17 zu erzielen. Die Versteifungsrippen 94a, 94b, 94c, 94d von denen lediglich beispielhaft zwei vertikal umlaufende Versteifungsrippen 94a, 94b im Bereich der Ecken bezeichnet sind und beispielhaft zwei horizontal verlaufende Versteifungsrippen 94c, 94d im Bereich der oberen Längskante der Kiste bezeichnet sind, sind flanschartig oder kragenartig ausgebildet. Die Zahl der Versteifungsrippen ist beliebig wählbar. Auch andere Formen und Arten von Versteifungselementen oder Versteifungsstreben, als die dargestellten, können erfindungsgemäß vorgesehen sein.

An den beiden Schmalseitenwänden 21g, 21e der Kiste 17 erstrecken sich jeweils außenseitig Wandungen 100, die einen Griff 99 bilden. Die Wandungen 100 erstrecken sich von der Außenseite des jeweiligen Schmalseitenwandelementes 21d, 21g nach außen weg, sodass sich eine Griffmulde 99 bildet. Dies ermöglicht eine vollständige durchgehend flüssigkeitsdichte Ausbildung der jeweiligen Schmalseitenwand 21e, 21g und dennoch die Anbringung eines Griffes.

Die Kiste 17 weist einen nach außen vorstehenden, umlaufenden Kragen 92 auf. Dieser umfasst, jeweils mittig, bezogen auf die Kanten der Kiste 17, angeordnete Durchbrüche oder Öffnungen 24c, 24d, 24e, 24f.

Die Durchbrüche 24c, 24d, 24e, 24f dienen der Befestigung der Sicherung einer Plombe, was später noch beschrieben wird. Von der Erfindung ist auch umfasst, wenn die Kiste 17 lediglich eine solche Öffnung 24c aufweist.

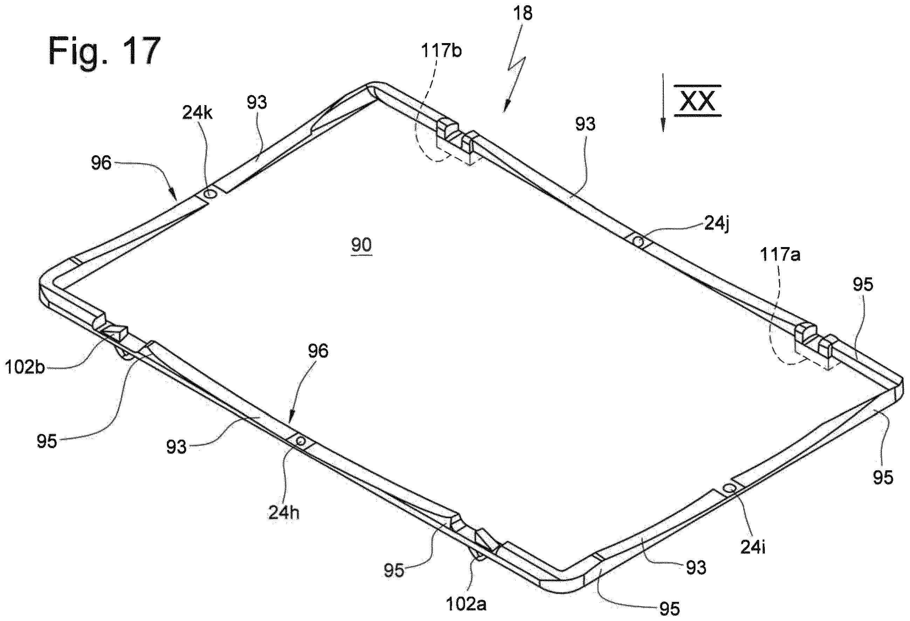

Figur 17 zeigt den Deckel 18 für die Kiste 17 der Figur 16. Der Deckel 18 ist bei dem Ausführungsbeispiel der Figur 17 als im Wesentlichen plattenförmiges Element ausgebildet. Auch der Deckel 18 weist einen nach außen vorstehenden umlaufenden Kragen 93 auf.

Der Deckel 18 weist eine Oberseite 90 und eine Unterseite 91 auf. Oberseite 90 und Unterseite 91 des Deckels 18 sind im Wesentlichen eben und vorsprungfrei ausgebildet. Der von dem Deckel 18 nach außen vorstehende umlaufende Kragen 93 weist hingegen eine noch näher zu beschreibende Kontur auf.

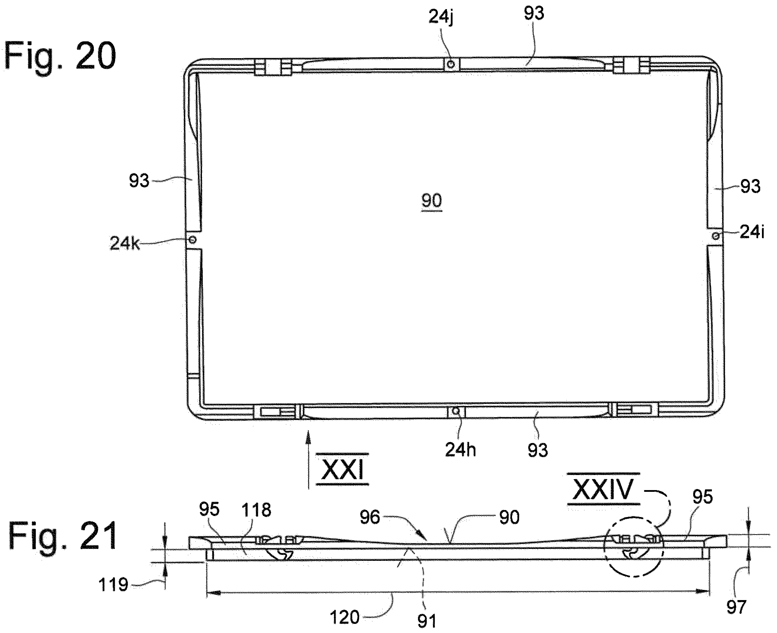

Zunächst ist beachtlich, dass der Kragen 93 des Deckels 18 einen umlaufenden Rahmen 95 ausbildet. Dieser besitzt eine maximale Höhe 97, die beispielsweise in der Seitenansicht des Deckels 18 der Figur 21 deutlich wird.

Der Rahmen 95 weist jeweils etwa mittig eine Einbuchtung 96 auf. Bei dem Ausführungsbeispiel der Figuren ist die Einbuchtung 96 bogenförmig ausgebildet. Auch andere Arten und Ausbildungen von Einbuchtungen 96 und auch andere Anzahlen von Einbuchtungen 96 sind von der Erfindung umfasst.

Jeweils im Bereich der Einbuchtung 96, etwa mittig bezogen auf die Längs- und Quererstreckungen des Deckels 18, weist der Deckel 18 an seinem Kragen 93 Durchbrüche 24h, 24i, 24j, 24k auf.

Im montierten Zustand des Deckels 18 auf der Kiste 17 kommt jeweils eine Öffnung des Deckels 18, z.B. die Öffnung 24h, mit einer Öffnung an der Kiste 17, z.B. mit dem Durchbruch 24c, in Flucht.

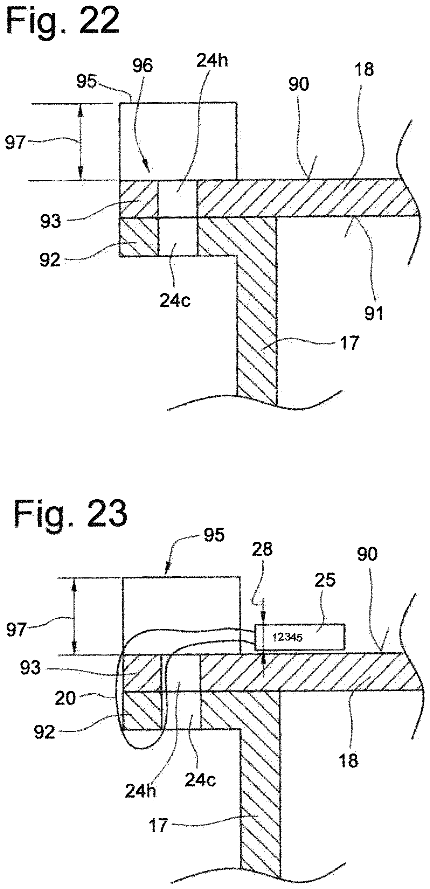

Figur 22 zeigt schematisch den montierten Zustand von Deckel 18 und Kiste 17. Hier ist die Öffnung 24c im Kragen 92 der Kiste 17 mit der Öffnung 24h in dem Kragen 93 des Deckels 18 in Flucht gebracht.

Figur 23 verdeutlicht weiter, dass die Sicherung 20 für den Deckel 18, die mit der Plombe 25 verbunden ist, durch die fluchtende Anordnung der Durchbrüche 24c, 24h hindurchtreten kann und auf diese Weise den Deckel 18 an der Kiste 17 sichern kann.

Die Plombe 25 kann auf diese Weise besonders vorteilhaft angebracht und auch untergebracht werden.

Figur 23 verdeutlicht, dass die Plombe 25 auf der Oberseite 90 des Deckels 18 aufliegt. Die Plombe weist dabei eine Höhe 28 auf, die geringer ist, als die Höhe 97 des Rahmens 95.

Wenn mehrere jeweils mit einem Deckel 18 verschlossene Transportvorrichtungen 17 übereinander gestapelt werden, sorgt der Rahmen 95 für eine Beabstandung zwischen der Oberseite 90 des Deckels 18 und der Unterseite der darüber angeordneten, gestapelten Kiste 17. Infolge dieser Beabstandung entsteht ein Unterbringungsraum für die Plombe 25.

Für den Fall, dass also mehrere Transportvorrichtungen 17 übereinander gestapelt sind, kann die Plombe 25 in diesem Unterbringungsraum untergebracht werden. Die Plombe 25 stört beim Transport nicht, da sie weder eine Stapelung mehrerer Transportvorrichtungen 17 beeinträchtigt, noch über die seitlichen Abmessungen, die durch die Außenumfangsflächen der Kragen 92, 93 von Kiste 17 in Deckel 18 bereitgestellt sind, hinausragt. Figur 23 verdeutlicht, dass lediglich die Sicherung 20 etwas vorragt, was aber vernachlässigbar ist.

Der guten Ordnung halber sei darauf hingewiesen, dass in Figur 23 die Höhe der Plombe 25 mit 98 bezeichnet ist. Die Höhe 98 ist geringer als die Höhe 97 des Rahmens 95.

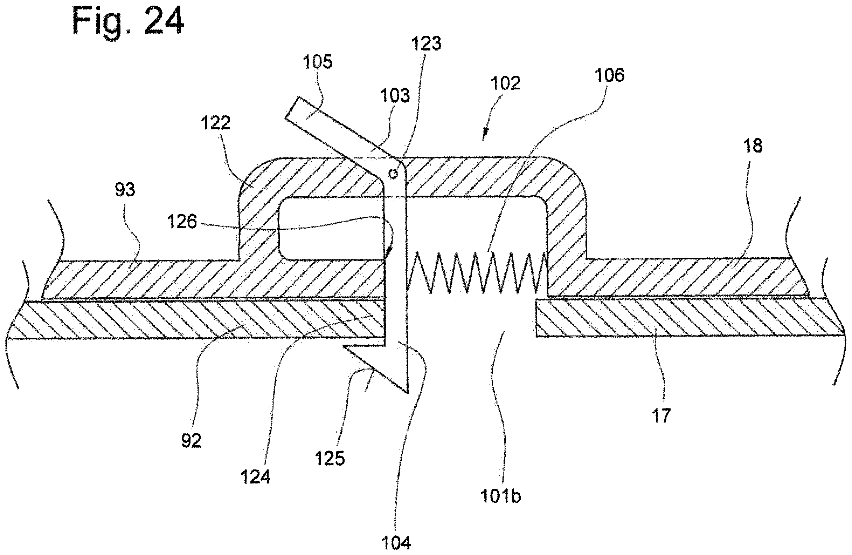

Der Kragen 92 der Transportvorrichtung 17 weist darüber hinaus Ausnehmungen 101a, 101b, 101c, 101d auf. Diese Ausnehmungen dienen der Aufnahme von Funktionselementen am Deckel 18. Am Deckel 18 sind ausweislich des Ausführungsbeispiels der Figur 17 als Funktionselement zwei Verriegelungseinrichtungen 102a, 102b angeordnet. Diese sind in den Figuren 17, 18, 20 und 21 nur schematisch angedeutet und sollen unter Bezugnahme auf Figur 24, anhand einer davon abweichenden, lediglich das Funktionsprinzip erläuternden Darstellung vorgestellt werden.

Figur 24 macht deutlich, dass an dem Deckel 18 eine Verriegelungseinrichtung 102 angeordnet ist. Diese umfasst insbesondere ein Gehäuse 122, das fest mit dem Kragen 93 des Deckels 18 verbunden ist.

An dem Gehäuse 122 ist um eine Schwenkachse 123 schwenkbar ein zweiarmiger Hebel 103 angeordnet. Der Hebel 103 umfasst einen Betätigungsarm 105 und einen zweiten Arm, der eine Klaue 104 umfasst. Eine Druckfeder 106 stützt die Klaue 104 gegenüber dem Gehäuse 112 ab und spannt die Klaue 104 in ihre Sperrposition gemäß Figur 24 vor.

In der Sperrposition gemäß Figur 24 untergreift die Klaue 104 einen Randbereich 124 des Kragens 92, der eine Öffnung 101b umgibt und verriegelt auf diese Weise den Deckel 18 fest und sicher an der Transportvorrichtung 17.

Zum Lösen des Deckels 18 von der Kiste 17 kann eine Bedienperson auf den Betätigungsarm 105 eine Kraft ausüben, die den Hebel 103 gegen die Kraft der Feder 106 entgegen dem Uhrzeigersinn um die Schwenkachse 123 verschwenkt. Die Klaue 104 gerät dann in eine Außereingriffsstellung und kann infolge einer Auseinanderbewegung von Deckel 18 und Transportvorrichtung 17 durch die Öffnung 101b hindurchtreten und eine Lösung des Deckels 18 von der Kiste 17 ermöglichen.

Wird ein gelöster Deckel 18 nachfolgend zur Erreichung einer Verriegelung wieder auf die Transportvorrichtung 17 gesetzt, kann eine Steuerfläche 125 an der Klaue 104 in Zusammenwirken mit der Kante 126 dafür sorgen, dass der Hebel 103 zwangsgesteuert gegen die Federkraft entgegen dem Uhrzeigersinn verlagert wird, um die in ihre Sperrposition hin vorgespannte Klaue 104 kurzzeitig freizusetzen, so dass die Klaue 104 eine Kante 126 und den Randbereich 124 zunächst passieren und nachfolgend den Randbereich 124 hintergreifen kann.

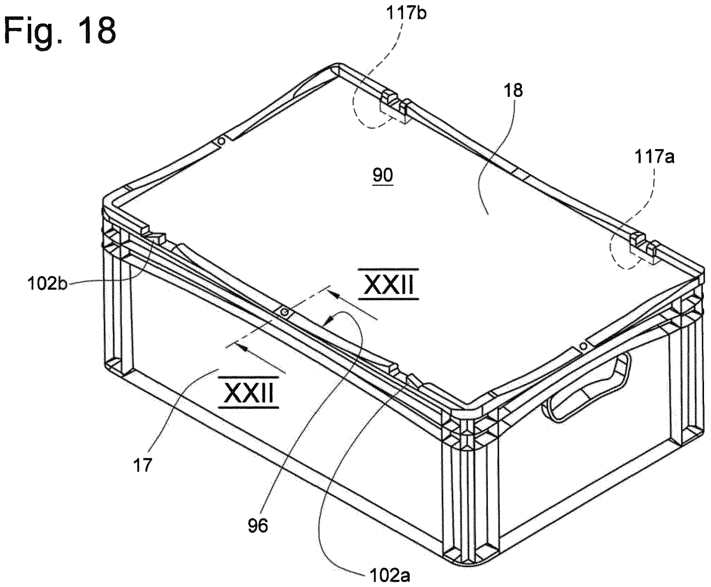

Bei dem Ausführungsbeispiel gemäß den Figuren 18, 20 und 21 sind jeweils zwei Verriegelungseinrichtungen 102a, 102b vorgesehen. Von der Erfindung sind auch Transportvorrichtungen 17 umfasst, die in den Figuren 17 nicht dargestellt sind, bei denen nur eine einzige Verriegelungsvorrichtung vorgesehen ist, oder bei der mehrere Verriegelungsvorrichtungen vorgesehen sind.

In dem Kragen 92 der Transportvorrichtung 17 befinden sich darüber hinaus, wie ausweislich in Figur 16 dargestellt, Ausnehmungen 101c und 101d, die zur Aufnahme weiterer Funktionselemente am Deckel 18 dienen.

Figur 17 deutet lediglich gestrichelt an der Unterseite 91 des Deckels 18 bzw. an der Unterseite des Rahmens 95 angeordnete Funktionselemente 117a, 117b an, die Scharniere ausbilden.

Diese Funktionselemente 117a, 117b weisen z.B. quaderförmige Vorsprünge auf, die in die Ausnehmungen 101c, 101d am Kragen 92 der Transportvorrichtung 17 einsetzbar sind und dort entweder lösbar oder dauerhaft befestigt oder verriegelbar sind. Die Scharniere 117a, 117b stellen eine Schwenkbarkeit des Deckels 18 relativ zur Kiste 17 bereit. Hierdurch wird die Handhabung der Transportvorrichtung 17 vereinfacht.

Figur 21 zeigt in der Seitenansicht eine weitere Besonderheit der Transportvorrichtung 17 bzw. des Deckels 18:
Von der Unterseite 21 des Deckels 18 steht nach unten ein insbesondere umlaufend ausgebildeter Eintauchkragen 118 vor. Dieser weist eine Höhe 119 auf, gemessen von der Unterseite 91 des Deckels .

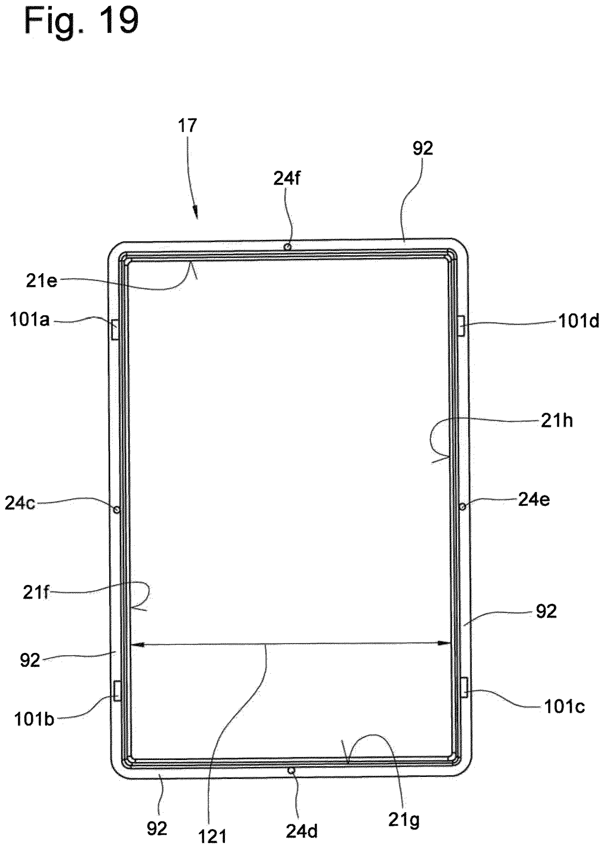

Der Eintauchkragen 118 weist Außenabmessungen 120 auf, die nur geringfügig kleiner sind als die Innenabmessungen 121 (Fig. 19) der Transportvorrichtung 17. Der Eintauchkragen 118 passt also genau in den Innenraum 127 der Kiste 17 hinein. Dadurch kommt es zu einer Überlappung zwischen Bereichen der Seitenwände 21f, 21g, 21h, 21i der Kiste 17 und dem Eintauchkragen 118. Die Abmessungen des Eintauchkragens 118 und der Kiste 17 sind so bemessen, dass unter Berücksichtigung von zu erwartenden temperaturbedingten und belastungsbedingten Verformungen gerade das für eine Bewegung erforderliche Spiel bereitgestellt wird.

Die Höhe 119 des Eintauchkragens 118 kann mindestens 10mm, z.B. zwischen 10mm und 30mm betragen.

Der Eintauchkragen 118 ermöglicht insbesondere eine Erzielung von Ungeziefer-Dichtigkeit, insbesondere eine Fruchtfliegen-Dichtigkeit und/ oder eine Maden-Dichtigkeit.

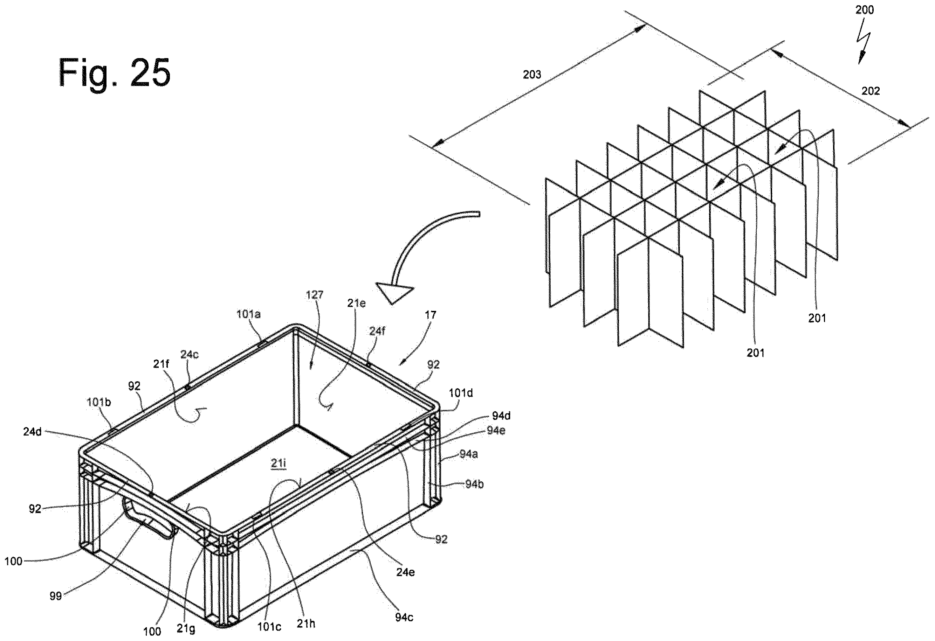

Ausweislich der Fig. 25 wird eine Positionierhilfe 200 illustriert, die in die Transportvorrichtung der Fig. 16 lösbar einsetzbar ist.

Die Positionierhilfe 200 umfasst z. B. eine Vielzahl von rechtwinklig zueinander angeordneten Wänden, die zwischen sich Fächer 201 zur Unterbringung von z. B. aus Glas bestehenden Mehrweg-Behältnissen bilden.

Die Positionierhilfe 200 weist Außenabmessungen 202, 203 auf, die den Innenabmessungen der Transportvorrichtung entsprechen oder etwa entsprechen.

Die Höhe der Positionierhilfe 200 ist beliebig, aber insbesondere geringer als die Höhe der Transportvorrichtung.

In die einzelnen Fächer 201 können gespülte oder ungespülte Behältnisse eingesetzt werden, z. B. Gurkengläser oder Aluminiumbehältnisse zur Unterbringung von Kakao oder andere Mehrwegbehältnisse, die vor unmittelbarem Kontakt miteinander, insbesondere zur Vermeidung von Beschädigungen während des Transportes, geschützt werden sollen.

Die Positionierhilfe 200 kann aus Kunststoff oder aus einem anderen geeigneten Material bestehen.

In Anpassung an unterschiedliche, zu transportierende Behältnisse können unterschiedliche Positionierhilfen vorgesehen sein. Die Positionierhilfen können auch Materialien wie Schaumstoff, Leichtschaum, wie Styropor, oder andere geeignete Positionierhilfen umfassen.

## Patentansprüche

1. System (10) zur Zirkulation spülfähiger und mehrwegfähiger Behältnisse (11, 12) zur Aufnahme von Speisen (62) oder Getränken, insbesondere für den Gastronomiebereich, umfassend
a) eine Mehrzahl von Behältnissen erster Art (11),
b) eine Mehrzahl von Behältnissen zweiter Art (12), wobei sich die Behältnisse zweiter Art (12) von den Behältnissen erster Art (11) unterscheiden,
wobei insbesondere jedem Behältnis (11, 12) ein bestimmter Rückgabe-Pfandbetrag und ein Spül-Pfandbetrag zugeordnet ist,
c) eine Mehrzahl von Transportvorrichtungen (17), die jeweils zur Aufnahme und zum Transport mehrerer Behältnisse (11, 12), insbesondere zum Transport mehrerer Behältnisse (11, 12) unterschiedlicher Art ausgebildet sind,
wobei die Transportvorrichtungen (17) jeweils eine eindeutige Kennung (33) aufweisen oder wobei jeder Transportvorrichtung (17) eine eindeutige Kennung (33) zugeordnet ist,
wobei die Transportvorrichtungen (17) jeweils nach Art einer Kiste ausgebildet sind, die insbesondere unter Zuhilfenahme eines Deckels (18) und insbesondere unter Zuhilfenahme einer Sicherung (20), insbesondere einer Plombe (25), in einen gesichert geschlossenen Zustand (49) überführbar ist, wobei in dem gesichert geschlossenen Zustand (49) eine Entnahme von Behältnissen (11, 22) aus der Transportvorrichtung (17) verhindert ist,
d) wenigstens einen Rechner (34), mit dem Informationen (40, 41, 42, 43, 44, 45, 46, 68, 69) verarbeitbar sind,
e) eine Mehrzahl von Erfassungseinrichtungen (36a, 36b usw.), die mit dem Rechner (34) verbindbar oder verbunden sind, mit denen Informationen über die Behältnisse und/oder Informationen über die Transportvorrichtungen erfassbar sind, und an den Rechner (34) weiterleitbar sind,
f) wenigstens eine Spülstation (26), an der die Behältnisse erster Art (11) und die Behältnisse zweiter Art (12), und insbesondere auch die Transportvorrichtungen (17), spülbar sind,
g) wenigstens eine erste Übergabestation (27), die insbesondere an der oder nahe der Spülstation (26) angeordnet ist,
an der gespülte Behältnisse in eine insbesondere gespülte Transportvorrichtung (17) verbringbar sind,
wobei die Transportvorrichtung (17) nach dem Einbringen der gespülten Behältnisse in ihren gesichert geschlossenen Zustand (49) überführbar ist,
wobei eine Erfassungseinrichtung (36a, 36b usw.) vorgesehen ist, die insbesondere an der Übergabestation (27) angeordnet oder betreibbar ist, mit der eine Information über die in die Transportvorrichtung einzubringenden oder eingebrachten Behältnisse der Kennung (33) der Transportvorrichtung (17) zuordenbar ist,
wobei die Information insbesondere eine Information über einen aufsummierten Pfandwert der in die Transportvorrichtung (17) eingebrachten Behältnisse (11, 12), umfasst,
wobei die Information weiter insbesondere eine Information über einen aufsummierten Rückgabe-Pfandwert und einen aufsummierten Spül-Pfandwert umfasst,
h) wenigstens eine Ausgabestation (28) für mit Speisen oder Getränke befüllte Behältnisse (11, 12), oder zur Ausgabe von gespülten, unbefüllten Behältnissen zum Zwecke der Befüllung mit Speisen oder Getränken, zu der die Transportvorrichtung (17) mit darin angeordneten, gespülten Behältnissen transportierbar ist,
wobei insbesondere eine Übergabe der Transporteinrichtung (17) mit gespülten Behältnissen an eine bestimmte Ausgabestation (28) von einer Erfassungseinrichtung (36a, 36b usw.) erfassbar ist,
wobei die Transportvorrichtung (17) insbesondere an der Ausgabestation (28) zur Entnahme der Behältnisse (11, 12) und insbesondere zur nachfolgenden Befüllung der gespülten Behältnisse mit Speisen und Getränken öffenbar ist,
wobei ein Rücktransport ungespülter Behältnisse, insbesondere von der Ausgabestation (28), zu der Spülstation (26), insbesondere in der Transportvorrichtung (17), durchführbar ist, wobei die Transportvorrichtung (17) insbesondere an der Ausgabestation (28), nach der Befüllung mit ungespülten Behältnissen in ihren gesichert geschlossenen Zustand (49) überführbar ist,
und wobei mittels einer Erfassungseinrichtung (36a, 36b usw.) der mit ungespülten Behältnissen befüllten Transportvorrichtung (17) insbesondere eine Identifikationsnummer (29) der Ausgabestation (28) zuordenbar ist,
i) insbesondere wenigstens eine Rück-Übergabestation, die insbesondere an der Spülstation (26) angeordnet ist, an der eine Transportvorrichtung (17) mit ungespülten Behältnissen insbesondere aus ihrem gesichert geschlossenen Zustand (49) zur Entnahme der ungespülten Behältnisse öffenbar ist,
wobei mittels einer Erfassungseinrichtung (36a, 36b usw.) eine Information über die zu entnehmenden Behältnisse, insbesondere eine Information über einen aufsummierten Pfandwert der zu entnehmenden Behältnisse, der Kennung der Transportvorrichtung und/oder der Identifikationsnummer (29) der Ausgabestation (28) zuordenbar ist,
j) wenigstens eine insbesondere mittels eines Codes (31) identifizierbare, insbesondere automatisierte Rücknahmestation, mit der Behältnisse unterschiedlicher Art unter Ermittlung ihres Rückgabe-Pfandwertes von einer Erfassungseinrichtung (36a, 36b usw.) erfassbar sind, und an der ungespülte Behältnisse, insbesondere unter Auszahlung ihres Rückgabe-Pfandwertes, abgebbar sind,
wobei an der Rücknahmestation eine Mehrzahl ungespülter Behältnisse in eine Transportvorrichtung (17) einbringbar ist, die zum Zwecke eines Transportes hin zu der Spülstation (26) insbesondere in einen gesichert verschlossenen Zustand (49) überführbar ist,
wobei mittels einer Erfassungseinrichtung (36a, 36b usw.) die Kennung der Transportvorrichtung insbesondere zu dem Code (31) der Rücknahmestation in Bezug setzbar ist,
k) wenigstens eine Rück-Übergabestation, insbesondere an der oder nahe der Spülstation (26), zu der die Transportvorrichtung (17) in gesichert geschlossenem Zustand befüllt mit ungespülten Behältnissen von der Rücknahmestation (31) transportierbar ist, an der die Transportvorrichtung (17) zur Entnahme der ungespülten Behältnisse öffenbar ist,
wobei mittels einer Erfassungseinrichtung (36a, 36b usw.) eine Information über die zu entnehmenden oder entnommmenden, ungespülten Behältnisse, insbesondere eine Information über einen aufsummierten Pfandwert der zu entnehmenden, ungespülten Behältnisse, der Kennung der Transportvorrichtung und/oder der Identifikationsnummer (29) der Rücknahmestation (28) zuordenbar ist.

2. System (10) nach Anspruch 1, **dadurch gekennzeichnet, dass** Behältnissen einer Art ein gleicher Pfandbetrag, insbesondere ein gleicher Spül-Pfandbetrag und/ oder ein gleicher Rückgabe-Pfandbetrag, zugeordnet ist.

3. System (10) nach Anspruch 1 oder 2, **dadurch gekennzeichnet, dass** Behältnissen unterschiedlicher Art (11, 12) unterschiedliche Pfandbeträge, insbesondere unterschiedliche Spül-Pfandbeträge und/ oder unterschiedliche Rückgabe-Pfandbeträge, zugeordnet sind.

4. System (10) nach den vorangegangenen Ansprüchen, **dadurch gekennzeichnet, dass** sich die Behältnisse erster Art (11) und die Behältnisse zweiter Art (12) durch Form und/oder Gewicht und/oder Größe und/oder Farbe und/oder durch eine Kennzeichnung unterscheiden.

5. System (10) nach den vorangegangenen Ansprüchen, **dadurch gekennzeichnet, dass** die Behältnisse erster Art (11) und die Behältnisse zweiter Art (12) aus der nachfolgenden Gruppe von Behältnissen umfassen:
Trinkbecher, Pizzaverpackung, Hamburgerverpackung, Ess-Schale, insbesondere Ein-Kammer-Schale, Mehr-Kammer-Schale, Deckel für einen Becher, Deckel für eine Ess-Schale, Deckel für eine Mehr-Kammerschale, Deckel für eine Ein-Kammerschale.

6. System (10) nach den vorangegangenen Ansprüchen, **dadurch gekennzeichnet, dass** die Behältnisse erster Art (11) und die Behältnisse zweiter Art (12) aus Kunststoff, Metall, Glas oder aus Keramik bestehen.

7. Transportvorrichtung (17) zur Aufnahme und zum Transport einer Vielzahl spülfähiger und mehrwegfähiger Behältnisse zur Aufnahme von Speisen oder Getränken, insbesondere für den Gastronomiebereich, insbesondere zur Aufnahme und zum Transport einer Vielzahl von Behältnissen unterschiedlicher Arten (11, 12), wobei die Transportvorrichtung (17) eine eindeutige Kennung aufweist, die ihre Identifizierung ermöglicht, und eine elektronische Zuordnung von Informationen zulässt, wobei die Transportvorrichtung (17) nach Art einer Kiste ausgebildet ist, die unter Zuhilfenahme eines Deckels (18) und unter Zuhilfenahme einer Sicherung (20), insbesondere einer Plombe (25), nach Befüllung mit gespülten oder mit ungespülten Behältnissen in einen gesichert geschlossenen Zustand (49) überführbar ist, wobei in dem gesichert geschlossenen Zustand (49) eine Entnahme von Behältnissen aus der Transportvorrichtung (17) verhindert ist.

8. Transportvorrichtung (17)) nach Anspruch 7, **dadurch gekennzeichnet, dass** diese diebstahlsicher und/ oder Ungeziefer sicher ausgebildet ist.

9. Verfahren zum Betreiben eines Systems zur Zirkulation spülfähiger und mehrwegfähiger Behältnisse (11, 12) zur Aufnahme von Speisen (62) oder Getränken, insbesondere für den Gastronomiebereich, insbesondere eines Systems (10) nach einem der vorangegangenen Ansprüche, umfassend die folgenden Schritte:
a) Bereitstellen einer Mehrzahl von Behältnissen erster Art (11),
b) Bereitstellen einer Mehrzahl von Behältnissen zweiter Art (12), wobei sich die Behältnisse zweiter Art (12) von den Behältnissen erster Art (11) unterscheiden,
wobei insbesondere jedem Behältnis (11, 12) ein bestimmter Rückgabe-Pfandbetrag und ein Spül-Pfandbetrag zugeordnet ist,
c) Bereitstellen einer Mehrzahl von Transportvorrichtungen (17), die jeweils zur Aufnahme und zum Transport mehrerer Behältnisse, insbesondere zum Transport mehrerer Behältnisse unterschiedlicher Art (11, 12) ausgebildet sind,
wobei die Transportvorrichtungen (17) jeweils eine eindeutige Kennung aufweisen oder wobei jeder Transportvorrichtung (17) eine eindeutige Kennung zugeordnet ist,
wobei die Transportvorrichtungen (17) jeweils nach Art einer Kiste ausgebildet sind, die insbesondere unter Zuhilfenahme eines Deckels (18) und insbesondere unter Zuhilfenahme einer Sicherung (20), insbesondere einer Plombe (25), in einen gesichert geschlossenen Zustand (49) überführbar ist, wobei in dem gesichert geschlossenen Zustand (49) eine Entnahme von Behältnissen aus der Transportvorrichtung (17) verhindert ist,
d) Bereitstellen wenigstens eines Rechners (34), mit dem Informationen verarbeitbar sind,
e) Bereitstellen einer Mehrzahl von Erfassungseinrichtungen (36a, 36b usw.), die mit dem Rechner (34) verbindbar oder verbunden sind, mit denen Informationen über die Behältnisse und/oder Informationen über die Transportvorrichtungen (17) erfassbar sind, und an den Rechner (34) weiterleitbar sind,
f) Bereitstellen wenigstens einer Spülstation (26), an der die Behältnisse erster Art (11) und die Behältnisse zweiter Art (12), und insbesondere auch die Transportvorrichtungen (17), spülbar sind,
g) Spülen von Behältnissen erster Art (11) und von Behältnissen zweiter Art (12),
h) Bereitstellen wenigstens einer ersten Übergabestation (27), die insbesondere an der oder nahe der Spülstation (26) angeordnet ist,
an der gespülte Behältnisse in eine insbesondere gespülte Transportvorrichtung (17) verbringbar sind,
wobei die Transportvorrichtung (17) nach dem Einbringen der gespülten Behältnisse in ihren gesichert geschlossenen Zustand (49) überführbar ist,
wobei eine Erfassungseinrichtung (36a, 36b usw.) vorgesehen ist, die insbesondere an der Übergabestation (27) angeordnet oder betreibbar ist, mit der eine Information über die in die Transportvorrichtung (17) eingebrachten Behältnisse der Kennung der Transportvorrichtung (17) zuordenbar ist,
wobei die Information insbesondere eine Information über einen aufsummierten Pfandwert der in die Transportvorrichtung (17) eingebrachten Behältnisse, umfasst, wobei die Information weiter insbesondere eine Information über einen aufsummierten Rückgabe-Pfandwert und einen aufsummierten Spül-Pfandwert umfasst,
i) Einbringen gespülter Behältnisse in eine Transportvorrichtung (17) und Zuordnen einer Information über die eingebrachten Behältnisse zu der Kennung der Transportvorrichtung (17),
j) Bereitstellen wenigstens einer Ausgabestation (28) für mit Speisen (62) oder Getränke befüllte Behältnisse, zu der die Transportvorrichtung (17) mit darin angeordneten, gespülten Behältnissen transportierbar ist, und Transportieren einer Transportvorrichtung (17) mit darin angeordneten, gespülten Behältnissen zu der Ausgabestation (28),
wobei insbesondere eine Übergabe der Transporteinrichtung mit gespülten Behältnissen an eine bestimmte Ausgabestation von einer Erfassungseinrichtung erfassbar ist,
Öffnen der Transportvorrichtung und Entnehmen der gespülten Behältnisse und Befüllen der Behältnisse mit Speisen und Getränken,
Befüllen der Transportvorrichtung mit ungespülten Behältnissen und überführen der Transportvorrichtung in ihren gesichert geschlossenen Zustand,
Zuordnen der Kennung der mit ungespülten Behältnissen befüllten Transportvorrichtung eine Identifikationsnummer der Ausgabestation,
k) Bereitstellen wenigstens einer Rück-Übergabestation, insbesondere an der Spülstation, Entnehmen von ungespülten Behältnissen aus der Transportvorrichtung an der Rück-Übergabestation,
Erfassen einer Information über die zu entnehmenden Behältnisse, insbesondere einer Information über einen aufsummierten Pfandwert der zu entnehmenden Behältnisse, und Zuordnen dieser Information der Kennung der Transportvorrichtung und/oder der Identifikationsnummer der Ausgabestation,
l) Bereitstellen wenigstens einer insbesondere mittels eines Codes identifizierbaren, insbesondere automatisierten Rücknahmestation, und Ermitteln eines Rückgabe-Pfandwertes von rückgegebenen, ungespülten Behältnissen unterschiedlicher Art, und Auszahlen des Rückgabe-Pfandwertes,
Einbringen einer Mehrzahl ungespülter Behältnisse an der Rücknahmestation in ein Transportbehältnis, und Überführen der Transportvorrichtung in einen gesichert verschlossenen Zustand,
In Bezug setzen der Kennung des Transportbehältnisses zu einem Code der Rücknahmestation,
m) Bereitstellen wenigstens einer Rück-Übergabestation, und Transportieren der Transportvorrichtung in gesichert geschlossenem Zustand, befüllt mit ungespülten Behältnissen von der Rücknahmestation zu der Rück-Übergabestation, Öffnen der Transportvorrichtung und Entnehmen der ungespülten Behältnisse,
Erfassen einer Information über die zu entnehmenden, ungespülten Behältnisse, insbesondere einer Information über einen aufsummierten Pfandwert der zu entnehmenden, ungespülten Behältnisse, und Zuordnen dieser Information zu einer Kennung der Transportvorrichtung und/oder der Identifikationsnummer der Rücknahmestation.

10. Mehrwegfähiges und spülfähiges Behältnis (13x, 14x) aus Kunststoff zur Aufnahme von Speisen oder Getränken, **gekennzeichnet durch** eine Kennung (37a, 37b), insbesondere nach Art einer Seriennummer, mit der das Behältnis eindeutig identifizierbar ist.

11. System (10), umfassend eine Vielzahl von Behältnissen nach Anspruch 10, **dadurch gekennzeichnet, dass** das System (10) einen Rechner (34) umfasst, mit dem einer Kennung (37n) eines Behältnisses eine Information über eine durchgeführte Spülung dieses Behältnisses zuordenbar ist.

12. Datensatz (38, 39), umfassend eine Information (40, 69a) über eine Kennung (37n) eines mehrwegfähigen und spülfähigen Behältnisses (14c) aus Kunststoff zur Aufnahme von Speisen oder Getränken, wobei über die Kennung das Behältnis eindeutig identifizierbar ist, und umfassend eine Information (40, 69a) über eine durchgeführte Spülung dieses Behältnisses.

13. Zwischenlager (70) für eine Mehrzahl von Transportvorrichtungen (17c, 17d, 17e), die jeweils zur Aufnahme und zum Transport mehrerer spülfähiger und mehrwegfähiger Behältnisse (11, 12) zur Aufnahme von Speisen (62) oder Getränken, ausgebildet sind, wobei die Transportvorrichtungen (17c, 17d, 17e) jeweils eine eindeutige Kennung (33) aufweisen, wobei die Transportvorrichtungen (17c, 17d, 17e) jeweils nach Art einer Kiste ausgebildet sind, wobei das Zwischenlager (70) eine Vielzahl von Stellplätzen (71a, 71b, 71c) für die Transportvorrichtungen (17c, 17d, 17e) umfasst, wobei jeder Stellplatz (71a, 71b) zugangsgesteuert öffenbar und schließbar ist, und wobei jeweils eine Kennung (72a, 72b , 72c, 72d) eines Stellplatzes einer Kennung (33) einer Transportvorrichtung (17c, 17d, 17e) zugeordnet ist oder zuordenbar ist.

14. System (10) zur Zirkulation spülfähiger und mehrwegfähiger Behältnisse (11, 12) zur Aufnahme von Speisen (62) oder Getränken, insbesondere für den Gastronomiebereich, umfassend
a) eine Mehrzahl von Behältnissen erster Art (11),
b) eine Mehrzahl von Behältnissen zweiter Art (12), wobei sich die Behältnisse zweiter Art (12) von den Behältnissen erster Art (11) unterscheiden, wobei insbesondere jedem Behältnis (11, 12) ein bestimmter Rückgabe-Pfandbetrag und ein Spül-Pfandbetrag zugeordnet ist,
c) eine Mehrzahl von Transportvorrichtungen (17), die jeweils zur Aufnahme und zum Transport mehrerer Behältnisse (11, 12), insbesondere zum Transport mehrerer Behältnisse (11, 12) unterschiedlicher Art ausgebildet sind,
wobei die Transportvorrichtungen (17) jeweils eine eindeutige Kennung (33) aufweisen oder wobei jeder Transportvorrichtung (17) eine eindeutige Kennung (33) zugeordnet ist,
wobei die Transportvorrichtungen (17) jeweils nach Art einer Kiste ausgebildet sind, die insbesondere unter Zuhilfenahme eines Deckels (18) und insbesondere unter Zuhilfenahme einer Sicherung (20), insbesondere einer Plombe (25), in einen gesichert geschlossenen Zustand (49) überführbar ist, wobei in dem gesichert geschlossenen Zustand (49) eine Entnahme von Behältnissen (11, 22) aus der Transportvorrichtung (17) verhindert ist,
d) wenigstens einen Rechner (34), mit dem Informationen (40, 41, 42, 43, 44, 45, 46, 68, 69) verarbeitbar sind,
e) eine Mehrzahl von Erfassungseinrichtungen (74, 36a, 36b), die mit dem Rechner (34) verbindbar oder verbunden sind, mit denen Informationen über die Behältnisse und/oder Informationen über die Transportvorrichtungen erfassbar sind, und an den Rechner (34) weiterleitbar sind,
f) wenigstens eine Spülstation (26), an der die Behältnisse erster Art (11) und die Behältnisse zweiter Art (12), und insbesondere auch die Transportvorrichtungen (17), spülbar sind,
g) wenigstens eine erste Übergabestation (27), die insbesondere an der oder nahe der Spülstation (26) angeordnet ist,
an der gespülte Behältnisse in eine insbesondere gespülte Transportvorrichtung (17) verbringbar sind,
wobei die Transportvorrichtung (17) nach dem Einbringen der gespülten Behältnisse in ihren gesichert geschlossenen Zustand (49) überführbar ist,
wobei eine Erfassungseinrichtung (36a, 36b usw.) vorgesehen ist, die insbesondere an der Übergabestation (27) angeordnet oder betreibbar ist, mit der eine Information über die in die Transportvorrichtung einzubringenden oder eingebrachten Behältnisse der Kennung (33) der Transportvorrichtung (17) zuordenbar ist,
wobei die Information insbesondere eine Information über einen aufsummierten Pfandwert der in die Transportvorrichtung (17) eingebrachten Behältnisse (11, 12), umfasst,
wobei die Information weiter insbesondere eine Information über einen aufsummierten Rückgabe-Pfandwert und einen aufsummierten Spül-Pfandwert umfasst,
h) wenigstens eine Ausgabestation (28) für mit Speisen oder Getränke befüllte Behältnisse (11, 12), oder zur Ausgabe von unbefüllten, gespülten Behältnissen zum Zwecke der Befüllung mit Speisen oder Getränken, zu der die Transportvorrichtung (17) mit darin angeordneten, gespülten Behältnissen, unter Zwischenschaltung eines Zwischenlagers, transportierbar ist,
wobei insbesondere eine Übergabe der Transporteinrichtung (17) mit gespülten Behältnissen an eine bestimmte Ausgabestation (28) von einer Erfassungseinrichtung (36a, 36b usw.) erfassbar ist,
wobei die Transportvorrichtung (17) insbesondere an der Ausgabestation (28) zur Entnahme der Behältnisse (11, 12) und zur Befüllung der gespülten Behältnisse mit Speisen und Getränken öffenbar ist,
wobei ein Rücktransport ungespülter Behältnisse (63), insbesondere von der Ausgabestation (28), zu der Spülstation (26) insbesondere in der Transportvorrichtung (17), insbesondere unter Zwischenschaltung des Zwischenlagers (70), durchführbar ist, wobei die Transportvorrichtung (17) insbesondere an der Ausgabestation (28) nach der Befüllung mit ungespülten Behältnissen insbesondere in ihren gesichert geschlossenen Zustand (49) überführbar ist,
und wobei mittels einer Erfassungseinrichtung (36a, 36b usw.) der mit ungespülten Behältnissen befüllten Transportvorrichtung (17) insbesondere eine Identifikationsnummer (29) der Ausgabestation (28) zuordenbar ist,
i) insbesondere wenigstens eine Rück-Übergabestation, die insbesondere an der Spülstation (26) angeordnet ist, an der eine Transportvorrichtung (17) mit ungespülten Behältnissen insbesondere aus ihrem gesichert geschlossenen Zustand (49) zur Entnahme der ungespülten Behältnisse öffenbar ist,
wobei mittels einer Erfassungseinrichtung (36a, 36b usw.) eine Information über die zu entnehmenden Behältnisse, insbesondere eine Information über einen aufsummierten Pfandwert der zu entnehmenden Behältnisse, der Kennung der Transportvorrichtung und/oder der Identifikationsnummer (29) der Ausgabestation (28) zuordenbar ist,
j) wenigstens eine insbesondere mittels eines Codes (31) identifizierbare, insbesondere automatisierte Rücknahmestation, mit der Behältnisse unterschiedlicher Art unter Ermittlung ihres Rückgabe-Pfandwertes von einer Erfassungseinrichtung (36a, 36b usw.) erfassbar sind, und an der ungespülte Behältnisse, insbesondere unter Auszahlung ihres Rückgabe-Pfandwertes, abgebbar sind,
wobei an der Rücknahmestation eine Mehrzahl ungespülter Behältnisse in eine Transportvorrichtung (17) einbringbar ist, die zum Zwecke eines Transportes hin zu der Spülstation (26) insbesondere in einen gesichert verschlossenen Zustand (49) überführbar ist,
wobei mittels einer Erfassungseinrichtung (36a, 36b usw.) die Kennung der Transportvorrichtung insbesondere zu dem Code (31) der Rücknahmestation in Bezug setzbar ist,
k) wenigstens eine Rück-Übergabestation, insbesondere an der oder nahe der Spülstation (26), zu der die Transportvorrichtung (17) in gesichert geschlossenem Zustand befüllt mit ungespülten Behältnissen von der Rücknahmestation (31) transportierbar ist, an der die Transportvorrichtung (17) zur Entnahme der ungespülten Behältnisse öffenbar ist,
wobei mittels einer Erfassungseinrichtung (36a, 36b usw.) eine Information über die zu entnehmenden oder entnommmenden, ungespülten Behältnisse, insbesondere eine Information über einen aufsummierten Pfandwert der zu entnehmenden, ungespülten Behältnisse, der Kennung der Transportvorrichtung und/oder der Identifikationsnummer (29) der Rücknahmestation (28) zuordenbar ist.

15. Verfahren zum Betreiben eines Systems zur Zirkulation spülfähiger und mehrwegfähiger Behältnisse (11, 12) zur Aufnahme von Speisen (62) oder Getränken, insbesondere für den Gastronomiebereich, insbesondere eines Systems (10) nach einem der vorangegangenen Ansprüche, umfassend die folgenden Schritte:
a) Bereitstellen einer Mehrzahl von Behältnissen erster Art (11),
b) Bereitstellen einer Mehrzahl von Behältnissen zweiter Art (12), wobei sich die Behältnisse zweiter Art (12) von den Behältnissen erster Art (11) unterscheiden,
wobei insbesondere jedem Behältnis (11, 12) ein bestimmter Rückgabe-Pfandbetrag und ein Spül-Pfandbetrag zugeordnet ist,
c) Bereitstellen einer Mehrzahl von Transportvorrichtungen (17), die jeweils zur Aufnahme und zum Transport mehrerer Behältnisse, insbesondere zum Transport mehrerer Behältnisse unterschiedlicher Art (11, 12) ausgebildet sind,
wobei die Transportvorrichtungen (17) jeweils eine eindeutige Kennung aufweisen oder wobei jeder Transportvorrichtung (17) eine eindeutige Kennung zugeordnet ist,
wobei die Transportvorrichtungen (17) jeweils nach Art einer Kiste ausgebildet sind, die insbesondere unter Zuhilfenahme eines Deckels (18) und insbesondere unter Zuhilfenahme einer Sicherung (20), insbesondere einer Plombe (25), in einen gesichert geschlossenen Zustand (49) überführbar ist, wobei in dem gesichert geschlossenen Zustand (49) eine Entnahme von Behältnissen aus der Transportvorrichtung (17) verhindert ist,
d) Bereitstellen wenigstens eines Rechners (34), mit dem Informationen verarbeitbar sind,
e) Bereitstellen einer Mehrzahl von Erfassungseinrichtungen (36a, 36b usw.), die mit dem Rechner (34) verbindbar oder verbunden sind, mit denen Informationen über die Behältnisse und/oder Informationen über die Transportvorrichtungen (17) erfassbar sind, und an den Rechner (34) weiterleitbar sind,
f) Bereitstellen wenigstens einer Spülstation (26), an der die Behältnisse erster Art (11) und die Behältnisse zweiter Art (12), und insbesondere auch die Transportvorrichtungen (17), spülbar sind,
g) Spülen von Behältnissen erster Art (11) und von Behältnissen zweiter Art (12),
h) Bereitstellen wenigstens einer ersten Übergabestation (27), die insbesondere an der oder nahe der Spülstation (26) angeordnet ist,
an der gespülte Behältnisse in eine insbesondere gespülte Transportvorrichtung (17) verbringbar sind,
wobei die Transportvorrichtung (17) nach dem Einbringen der gespülten Behältnisse in ihren gesichert geschlossenen Zustand (49) überführbar ist,
wobei eine Erfassungseinrichtung (36a, 36b usw.) vorgesehen ist, die insbesondere an der Übergabestation (27) angeordnet oder betreibbar ist, mit der eine Information über die in die Transportvorrichtung (17) eingebrachten Behältnisse der Kennung der Transportvorrichtung (17) zuordenbar ist,
wobei die Information insbesondere eine Information über einen aufsummierten Pfandwert der in die Transportvorrichtung (17) eingebrachten Behältnisse, umfasst, wobei die Information weiter insbesondere eine Information über einen aufsummierten Rückgabe-Pfandwert und einen aufsummierten Spül-Pfandwert umfasst,
i) Einbringen gespülter Behältnisse in eine Transportvorrichtung (17) und Zuordnen einer Information über die eingebrachten Behältnisse zu der Kennung der Transportvorrichtung (17),
j) Bereitstellen wenigstens einer Ausgabestation (28) für mit Speisen (62) oder Getränke befüllte Behältnisse, zu der die Transportvorrichtung (17) mit darin angeordneten, gespülten Behältnissen transportierbar ist,
k) Bereitstellen wenigstens eines Zwischenlagers (70) mit einer Vielzahl von Stellplätzen (71a, 71b) für Transportvorrichtungen (17),
l) Transportieren einer Transportvorrichtung (17) mit darin angeordneten, gespülten Behältnissen zu dem Zwischenlager (70) und nachfolgend Transportieren der Transportvorrichtung (17) mit darin angeordneten, gespülten Behältnissen zu der Ausgabestation (28),
wobei insbesondere eine Übergabe der Transporteinrichtung mit gespülten Behältnissen an einen bestimmten Stellplatz (71a, 71b) in dem Zwischenlager (70) von einer Erfassungseinrichtung (74) erfassbar ist,
und wobei nach erfolgtem Transport der Transporteinrichtung mit gespülten Behältnissen zu einer bestimmten Ausgabestation eine Übergabe der Transporteinrichtung mit gespülten Behältnissen an die Ausgabestation von einer Erfassungseinrichtung erfassbar ist,
Öffnen der Transportvorrichtung und Entnehmen der gespülten Behältnisse und Befüllen der Behältnisse mit Speisen und Getränken, Befüllen der Transportvorrichtung mit ungespülten Behältnissen und überführen der Transportvorrichtung in ihren gesichert geschlossenen Zustand,
Zuordnen der Kennung der mit ungespülten Behältnissen befüllten Transportvorrichtung eine Identifikationsnummer der Ausgabestation,
m) Bereitstellen wenigstens einer Rück-Übergabestation, insbesondere an der Spülstation,
Transportieren der mit ungespülten Behältnissen befüllten Transportvorrichtung zu der Rück-Übergabe Station,
oder
Transportieren der mit ungespülten Behältnissen befüllten Transportvorrichtung zu dem Zwischenlager und nachfolgendes Transportieren der mit ungespülten Behältnissen befüllten Transportvorrichtung von dem Zwischenlager zu der Rück-Übergabe Station,
Entnehmen von ungespülten Behältnissen aus der Transportvorrichtung an der Rück-Übergabestation,
Erfassen einer Information über die zu entnehmenden Behältnisse, insbesondere einer Information über einen aufsummierten Pfandwert der zu entnehmenden Behältnisse, und Zuordnen dieser Information der Kennung der Transportvorrichtung und/oder der Identifikationsnummer der Ausgabestation,
n) Bereitstellen wenigstens einer insbesondere mittels eines Codes identifizierbaren, insbesondere automatisierten Rücknahmestation, und Ermitteln eines Rückgabe-Pfandwertes von rückgegebenen, ungespülten Behältnissen unterschiedlicher Art, und Auszahlen des Rückgabe-Pfandwertes,
Einbringen einer Mehrzahl ungespülter Behältnisse an der Rücknahmestation in eine Transportvorrichtung, und Überführen der Transportvorrichtung in einen gesichert verschlossenen Zustand,
In Bezug setzen der Kennung des Transportvorrichtung zu einem Code der Rücknahmestation,
Bereitstellen wenigstens einer Rück-Übergabestation,
Transportieren der Transportvorrichtung (17) in gesichert geschlossenem Zustand, befüllt mit ungespülten Behältnissen (63) von der Rücknahmestation zu der Rück-Übergabestation,
oder
Transportieren der Transportvorrichtung (17) in gesichert geschlossenem Zustand, befüllt mit ungespülten Behältnissen (63) von der Rücknahmestation zu dem Zwischenlager (70) und nachfolgendes Transportieren der Transportvorrichtung in gesichert geschlossenem Zustand, befüllt mit ungespülten Behältnissen von dem Zwischenlager (70) zu der Rück-Übergabestation,
Öffnen der Transportvorrichtung (17) und Entnehmen der ungespülten Behältnisse (63),
Erfassen einer Information über die zu entnehmenden, ungespülten Behältnisse, insbesondere einer Information über einen aufsummierten Pfandwert der zu entnehmenden, ungespülten Behältnisse, und Zuordnen dieser Information zu einer Kennung der Transportvorrichtung und/oder der Identifikationsnummer der Rücknahmestation.
